(19) Europäisches Patentamt
European Patent Office
Office européen des brevets

(11) EP 3 606 981 B1

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **18712635.4**

(22) Anmeldetag: **28.03.2018**

(51) Int Cl.:
***C08G 65/26*** *(2006.01)* ***C08G 65/331*** *(2006.01)*

(86) Internationale Anmeldenummer:
**PCT/EP2018/058025**

(87) Internationale Veröffentlichungsnummer:
**WO 2018/184961 (11.10.2018 Gazette 2018/41)**

(54) **MONOEPOXID-MONOAMIN-ADDUKTE ALS NETZ- UND DISPERGIERMITTEL**

MONOEPOXIDE-MONOAMINE ADDUCTS AS WETTING AND DISPERSING AGENTS

ADDUIT DE MONOAMINE MONOÉPOXYDE EN TANT QU'AGENT MOUILLANT ET DISPERSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2017 EP 17165088**

(43) Veröffentlichungstag der Anmeldung:
**12.02.2020 Patentblatt 2020/07**

(73) Patentinhaber: **BYK-Chemie GmbH**
**46483 Wesel (DE)**

(72) Erfinder:
- **BESSEL, Michael**
  **46483 Wesel (DE)**
- **MEICHSNER, Marcus**
  **46483 Wesel (DE)**
- **NAGEL, Carsten**
  **46483 Wesel (DE)**
- **SANCHES Y SOSA, Maya**
  **46483 Wesel (DE)**
- **BIECKER, Christian**
  **46483 Wesel (DE)**
- **STANNEK, Peter**
  **46483 Wesel (DE)**

(74) Vertreter: **Altana IP Department**
**Altana Management Services GmbH**
**Abelstraße 45**
**46483 Wesel (DE)**

(56) Entgegenhaltungen:
**WO-A1-2016/059066**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 606 981 B1

## Beschreibung

Die vorliegende Erfindung betrifft ein als Netz- und Dispergiermittel geeignetes Epoxid-Amin-Addukt, dessen Herstellung, das Epoxid-Amin-Addukt enthaltende Dispersionen und Pigmentzubereitungen sowie die Verwendung des Epoxid-Amin-Addukts als Netz- und Dispergiermittel.

Als Netz- und Dispergiermittel einsetzbare Addukte auf Epoxid-Amin-Basis sind bereits aus mehreren Patentschriften bekannt.

So beschreibt die EP 1 486 524 A1 die Herstellung von Epoxid-Addukten und deren Salzen zur Verwendung als Dispergiermittel. Insbesondere werden Epoxid-Amin-Addukte beschrieben, die erhältlich sind durch die Umsetzung mono- oder polyfunktioneller, aromatischer Epoxide mit primären oder sekundären Polyoxyalkylenmonoaminen eines zahlenmittleren Molekulargewichts von mehr als 400 g/mol. Der Umsetzungsgrad der Epoxidgruppen sollte 90 bis 100 % betragen und der Gewichtsanteil der Additionsverbindungen an aromatischen Gruppen sollte nicht mehr als 50 Gew.-% betragen. In den erfindungsgemäßen Beispielen der EP 1 486 524 A1 wurden lediglich Polyepoxide mit Polyoxyalkylenmonoaminen umgesetzt. Die Umsetzung primärer Polyoxyalkylenmonoamine in direkter Kombination mit aromatischen Monoepoxiden wurde nicht offenbart.

Die EP 1 650 246 A1 offenbar in Beispiel 19 das Umsetzungsprodukt eines aromatischen Monoepoxids (Styrenoxid) mit sekundären Monoamin (Ethylethanolamin) und der nachfolgenden Alkoxylierung des Produkts mit Ethylenoxid und Propylenoxid.

Die EP 1 745 104 A1 offenbart kammartige Polyetheralkanolamine als Dispergiermittel für Tinten und Druckfarben. Diese werden wie in der EP 1 486 524 A1 durch Umsetzung von monofunktionell aminterminierten Polyethern mit Diglycidylethern erhalten.

In der WO 2012/049186 werden Epoxid-Amin-Addukte offenbart, die zwingend Polysiloxanseitenketten aufweisen. Bei der Herstellung dieser Epoxid-Amin-Addukte werden Polyepoxide eingesetzt. Zusätzlich können auch polysiloxanfreie Amine eingesetzt werden, hierunter auch monoaminfunktionelle Polyoxyalkylenamine oder auch tertiäre und primäre Aminogruppen tragende Diamine.

Die WO 2008/092687 A1 offenbart Netz- und Dispergiermittel auf der Basis von Isocyanatmonoaddukten. Diese werden erhalten durch Umsetzung eines Polyepoxids mit einem aliphatischen oder araliphatischen primären Amin, welches zusätzlich funktionelle Gruppen tragen kann und anschließender Reaktion mit einem Polyethergruppen tragenden Monoisocyanat an sekundäre Aminogruppen oder sekundäre Hydroxylgruppen, wobei die Anbindung der Polyethergruppen unter Ausbildung von Harnstoffgruppen oder Urethangruppen erfolgt.

Die WO 2011/070074 A1 beschreibt Epoxid-Amin-Addukte, die erhältlich sind durch die Umsetzung von Diglycidethern mit primäre Amingruppen tragenden Polyoxyalkylenmonoaminen und aliphatischen oder araliphatischen primären Aminen, die auch tertiäre Aminogruppen tragen können. Diese Vorstufen werden mit Ester- und/oder Ethergruppen tragenden Monoisocyanaten umgesetzt, um die in WO 2011/070074 A1 als Zielverbindungen beschriebenen Netz- und Dispergiermittel zu erhalten.

Die WO 2016/059066 A1 beschreibt Epoxid-Amin-Addukte die durch die Additionsreaktion von Diepoxidverbindungen mit primären Aminen und insbesondere Polyethermonoaminen gebildet werden und deren Einsatz als hochwirksame Netz- und Dispergieradditive in Lacken und Beschichtungen. Die in dieser Schrift veröffentlichten Epoxid-Amin-Addukt-Additive werden jedoch im Unterschied zur vorliegenden Erfindung durch einen statistischen Additionsprozess hergestellt und enthalten somit auch substanzielle Anteile an relativ hochmolekularen Copolymeren mit wesentlich mehr als einer Polyether-Seitenkette, die für die dort beschriebenen Anwendung für Rußdispersionen besonders geeignet sind. In manchen Anwendungsfeldern zeigen solche statistischen Copolymermischungen schlechte Verträglichkeiten mit dem Lacksystem, wie beispielsweise eine Trübung oder Stippenbildung.

Die US 9,206,347 B2 offenbart grenzflächenaktive Substanzen auf der Basis quaternärer Ammoniumverbindungen, welche mit hydrophoben $C_8$-$C_{150}$-Alkylresten terminierte Polyalkylenoxidstrukturen enthalten, und die im Bereich der Ölförderung eingesetzt werden können.

Die Netz- und Dispergiermittel sollten sowohl in wässrigen als auch in lösemittelbasierten Systemen einsetzbar sein und generell zu einer hervorragenden Dispergierung partikulärer Feststoffe beitragen. Diese äußert sich beispielsweise auch in einer möglichst niedrigen Anfangsviskosität der Systeme nach Einarbeitung der partikulären Feststoffe unter Verwendung der Netz- und Dispergiermittel sowie einer guten Langzeitstabilität der Systeme. Partikuläre Feststoffe enthaltende Lacke sollten zudem einen hohen Glanz besitzen und sich durch eine sehr hohe Transparenz auszeichnen. Der Begriff Netz- und Dispergiermittel wird hierin auch synonym mit dem Begriff Dispergiermittel oder Netz- und/oder Dispergiermittel verwendet.

Zudem sind an Netz- und Dispergiermittel für Kunststoffmassen besondere Anforderungen gerichtet. In diesem Anwendungsfeld ist entscheidend, dass keine flüchtigen Lösemittel enthalten sind und die eingesetzten Netz- und Dispergieradditive bei Raumtemperatur flüssig sind. Eine möglichst effektive und effiziente Viskositätsreduktion wird in oft extrem hoch gefüllten Kunststoffmassen angestrebt. In Anwendungen wie der Herstellung von Polymerbetonmassen, Polymerbetonfliesen ist zudem die Erreichung guter Entgasungsgeschwindigkeit und ein guter Verlauf wichtig. Damit

werden Festigkeit und Oberflächenbeschaffenheit der Polymerbetonfliesen, insbesondere deren Glanz und Freiheit von Bläschen positiv beeinflusst.

Aufgabe der vorliegenden Erfindung ist somit die Bereitstellung eines qualitativ hochwertigen Netz- und Dispergiermittels mit besonders guten Eigenschaften bezüglich der Stabilisierung von Partikel enthaltenden Dispersionen, insbesondere für universell einsetzbare Abtönpasten, zur Erzielung von breiten Verträglichkeiten in vielen Farben und Lackformulierungen. Zudem soll ein Netz- und Dispergiermittel bereitgestellt werden, dass die effektive und effiziente Viskositätsreduzierung in Epoxid-basierten Polymerbetonmassen gewährleistet und für hervorragende Entgasungsergebnisse und gute Verlaufseigenschaften sorgt.

Die Lösung dieser Aufgabe erfolgt überraschenderweise durch die Bereitstellung eines Epoxid-Amin-Addukts herstellbar durch die Umsetzung
eines oder mehrerer primärer Amine (A) der allgemeinen Formel (I)

$$Q\text{-}NH_2 \qquad (I),$$

mit einem oder mehreren Monoepoxiden (B) der allgemeinen Formel (II)

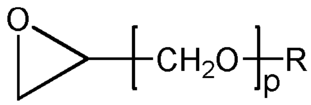

(II)

wobei

Q für einen Rest mit $R^t$-$[OEt]_n[OPr]_m[OBu]_s$- steht, worin
$R^t$ für einen Rest gewählt aus Alkylresten mit 1 bis 6 Kohlenstoffatomen steht,
OEt für einen Ethylenoxid-Rest, OPr für einen Propylenoxid-Rest und OBu für einen Butylenoxid-Rest steht,
n für eine Zahl von 0 bis 100, m für eine Zahl von 3 bis 50 und s für eine Zahl von 0 bis 20 steht und n+m+s = 3 bis 170 beträgt,
R für einen organischen Rest steht, gewählt aus aliphatischen Resten mit 4 bis 24 Kohlenstoffatomen, aromatischen Resten mit 6 bis 18 Kohlenstoffatomen und araliphatischen Resten mit 7 bis 34 Kohlenstoffatomen, und p für 0 oder 1 steht,

wobei

(i)das oder die primären Amine (A) und das oder die Monoepoxide (B) in einem Verhältnis (A):(B) von 1:2 bis 1:1,35, vorzugsweise 1:1,90 bis 1:1,50, besonders bevorzugt 1:1,85 bis 1:1,70 umgesetzt werden und
(ii) mindestens 40 mol-% der Reste R gewählt sind aus aromatischen Resten mit 6 bis 18 Kohlenstoffatomen und araliphatischen Resten mit 7 bis 24 Kohlenstoffatomen, vorzugsweise aromatischen Resten mit 6 bis 20 Kohlenstoffatomen, besonders bevorzugt aromatischen Resten mit 6 oder 7 Kohlenstoffatomen; und gegebenenfalls anschließender

(a) Versalzung und/oder Quaternisierung des über die Formel (I) in das Umsetzungsprodukt eingebrachten Stickstoffatoms; und/oder
(b) Reaktion der durch Ringöffnung des Epoxidrings der Formel (II) gebildeten Hydroxylgruppe und/oder der durch äquimolare Umsetzung einer Spezies der Formel (I) mit einer Spezies der Formel (II) entstandenen NH-Gruppe mit einer oder mehreren Spezies gewählt aus der Gruppe bestehend aus Lactonen, Hydroxycarbonsäuren, Lactiden, Monoepoxidverbindungen und Monoisocyanaten.

Da je nach Verhältnis von (A) zu (B) etwas unterschiedliche Produkte erhalten werden, lassen sich die erfindungsgemäßen Epoxid-Amin-Addukte nicht besser als durch das zu deren Definition verwendete Herstellungsverfahren beschreiben.

Auch die durch Versalzung, Quaternisierung, Adduktbildung mit Monoisocyanatverbindungen, die Veretherung und/oder Veresterung vorgenannter Epoxid-Amin-Addukte erhaltenen Spezies zählen hierin zu den Epoxid-Amin-Addukten gemäß der vorliegenden Erfindung. Alle im Folgenden in Bezug auf die Epoxid-Amin-Addukte verwendeten Konzentrations- und Mengenangaben beziehen sich daher auf die Gesamtheit der Epoxid-Amin-Addukte, unabhängig davon, ob es sich um die unversalzten, nicht quaternisierten, nicht modifizierten Epoxid-Amin-Addukte handelt wie sie vorstehend beschrieben sind oder um deren Versalzungs-, Quaternisierungs- und/oder nachträglich modifizierten Produkte handelt, wie sie insbesondere weiter unten beschrieben sind.

**Primäre Amine (A)**

Die primären Amine (A) der Formel (I)

$$Q\text{-}NH_2 \qquad (I)$$

sind Amine, worin Q für einen Rest mit $R^t$-$[OEt]_n[OPr]_m[OBu]_s$- steht.
Hierin terminiert der Rest $R^t$ die Alkylenoxy-Kette $[OEt]_n[OPr]_m[OBu]_s$ und ist gewählt aus Alkylresten mit 1 bis 6, vorzugsweise 1 bis 4 Kohlenstoffatomen. Besonders bevorzugt steht $R^t$ für einen Methyl-Rest.
Der Index n steht für eine Zahl von 0 bis 100, m für eine Zahl von 3 bis 50 und s für eine Zahl von 0 bis 20 und die Summe aus n+m+s beträgt 3 bis 170.
Bevorzugt steht n für eine Zahl von 5 bis 75, m für eine Zahl von 3 bis 40 und s für eine Zahl von 0 bis 10. Besonders bevorzugt ist die Summe aus n+m+s = 8 bis 80, ganz besonders bevorzugt 8 bis 50, wobei die beiden vorgenannten Bereiche für n+m+s auch für den Fall gelten, dass s = 0 ist.
Vorzugsweise gilt, dass n > m > s ist. Besonders bevorzugt ist s = 0.
Besonders bevorzugt gilt s = 0 und das Verhältnis von n/m > 1, besser > 2 und noch besser > 3, wie beispielsweise 3 bis 50.
Die n [OEt]-, m [OPr]- und s [OBu]-Einheiten können in beliebiger Reihenfolge angeordnet sein. Hierzu zählt insbesondere eine statistische Reihenfolge oder die Anordnung in Form von [OEt]-, [OPr]- und/oder [OBu]-Blöcken oder eine Anordnung in Form eines Gradienten, beispielsweise einer Anreicherung oder Abreicherung von [OEt]- oder den anderen Alkoxy-Einheiten entlang der Polyalkylenoxidkette.
Derartige primäre Amine (A) sind beispielsweise käuflich unter der Bezeichnung Jeffamine® Monoamine (M Serie) und Surfonamine® von der Firma Huntsman erhältlich. Beispielhaft seien die Produkte Jeffamine ® M-600, Jeffamine ® M-1000, Jeffamine ® M-2005, Jeffamine ® M-2070, Surfonamin ® L100 und Surfonamin ® L200.
Die Gesamtheit der primären Amine (A) wird hierin auch als Komponente (A) oder einfach als (A) bezeichnet.

**Monoepoxide (B)**

In den Monoepoxiden (B) der allgemeinen Formel (II)

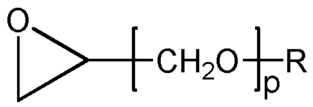

(II)

steht R für einen organischen Rest, gewählt aus aliphatischen Resten mit 4 bis 24 Kohlenstoffatomen, aromatischen Resten mit 6 bis 18 Kohlenstoffatomen und araliphatischen Resten mit 7 bis 34 Kohlenstoffatomen und p steht für 0 oder 1.
Wenn p = 1 ist, so handelt es sich bei den Monoepoxiden vorzugsweise um Glycidylether oder Glycidylester, besonders bevorzugt um Glycidylether.
Mindestens 40 mol-%, vorzugsweise mindestens 50 mol-%, besonders bevorzugt mindestens 60 mol-% oder mindestens 75 mol-% aller in der Reaktion eingesetzten Monoepoxide (B) besitzen einen Rest R gewählt aus aromatischen und araliphatischen Resten, besonders bevorzugt aus aromatischen Resten. Ganz besonders bevorzugt sind mindestens 90 mol-% oder gar 100 mol-% der Reste R bezogen auf die Gesamtheit der eingesetzten Monoepoxide gewählt aus aromatischen und araliphatischen Resten, besser noch nur aus der Gruppe der aromatischen Reste.
Unter den araliphatischen Resten R sind insbesondere solche bevorzugt, die 7 bis 30 und ganz besonders bevorzugt 7 bis 11 Kohlenstoffatome enthalten.
Unter den besonders bevorzugten aromatischen Resten R sind insbesondere solche bevorzugt, die 6 bis 10 und ganz besonders bevorzugt 7 oder 8 Kohlenstoffatome enthalten, wie insbesondere Phenyl und o-, m- und p-Kresyl, ganz besonders bevorzugt o-Kresyl.
Neben dem obligatorischen Anteil aromatischer und/oder araliphatischer Reste R, können als Monoepoxide (B) auch solche mit aliphatischen Resten R eingesetzt werden. Der Begriff "aliphatisch" umfasst hierin cyclische und acyclische, gesättigte oder ungesättigte organische Reste, mit Ausnahme aromatischer Reste. Der Rest R kann hierbei Heteroatome, wie beispielsweise und insbesondere Sauerstoffatome und/oder Schwefelatome enthalten. Besonders bevorzugt handelt es sich bei den vorgenannten Resten R um reine Kohlenwasserstoffreste.
Ist der Rest R ein acyclischer aliphatischer Rest, so steht R vorzugsweise für einen Kohlenwasserstoffrest mit 4 bis 20 Kohlenstoffatomen, insbesondere für einen linearen oder verzweigten Alkylrest mit 3 bis 20, vorzugsweise 6 bis 18 und besonders bevorzugt 8 bis 18 Kohlenstoffatomen.
Ist der Rest R ein cyclischer aliphatischer Rest, so kann es sich hierbei um einen hydrierten aromatischen oder

hydrierten araliphatischen Rest handeln. Vorzugsweise enthalten cycloaliphatische Reste R 4 bis 10, besonders bevorzugt 6 oder 7 bis 10 Kohlenstoffatome. Prinzipiell sind alle aromatischen und araliphatischen Reste einer Hydrierung zugänglich, insbesondere die weiter unten beschriebenen.

Bevorzugte Monoepoxide (B) mit p = 1 sind Glycidylether. Unter diesen sind solche mit einem aromatischen Rest R besonders bevorzugt. Ganz besonders bevorzugte Vertreter hierunter sind der Phenylglycidylether (R = Phenyl) und der Kresylglycidylether (R = Kresyl), wobei der letztgenannte am bevorzugtesten ist. Als Glycidylether mit aliphatischen Resten R sind solche besonders bevorzugt, die lineare oder verzweigte Alkylreste als Reste R tragen. Unter diesen sind besonders solche bevorzugt, die 4 bis 20, ganz besonders bevorzugt 8 bis 18, noch bevorzugter 10 bis16 Kohlenstoffatome im Alkylrest enthalten. Exemplarisch können als besonders bevorzugte aliphatische Glycidylether n-Butylglycidylether, iso-Butylglycidylether, tert-Butylglycidylether, 2-Ethylhexylglycidylether und der C13/15-Alkylglycidylether genannt werden.

Weitere Monoepoxide (B) mit p = 1 sind Glycidylester, vorzugsweise Glycidylester aliphatischer Monocarbonsäuren mit vorzugsweise 6 bis 20, besonders bevorzugt 8 bis 16 und ganz besonders bevorzugt mit 8 bis 12 Kohlenstoffatomen, wie beispielsweise Glycidylester der Neodekansäure (Cardura E10 der Firma Hexion).

Ein bevorzugtes aromatisches Monoepoxid (B) mit p = 0 ist beispielsweise Styroloxid (R = Phenyl).

Weitere Monoepoxide (B) mit p = 0 sind das cycloaliphatische Cyclohexyloxid und die acylisch aliphatischen Alphaolefinoxide, mit insbesondere 6 bis 20, besonders bevorzugt 8 bis 18 Kohlenstoffatomen wie beispielsweise C8-Olefinoxid, C16-Olefinoxid und C18-Olefinoxid (erhältlich unter der Handelsbezeichnung Vikolox® der Firma Arkema).

Sofern nicht

Die Gesamtheit der Monoepoxide (B) wird hierin auch als Komponente (B) oder einfach als (B) bezeichnet.

**Bevorzugte Epoxid-Amin-Addukte**

In der Regel enthalten die erfindungsgemäßen unversalzten, nicht quaternisierten und nicht modifizierten Epoxid-Amin-Addukte eine oder mehrere Spezies der allgemeinen Formeln (III)

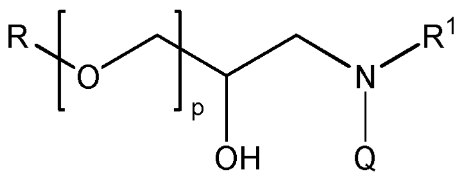

(III)

wobei

Q , R und p wie in Formel (I) definiert sind, und
$R^1$ für H oder einen Rest $CH_2$-CH(OH)-[$CH_2$-O]$_p$-R steht, mit der Maßgabe, dass mindestens 33 mol-%, vorzugsweise mindestens 50 mol-%, besonders bevorzugt mindestens 60 mol-% und ganz besonders bevorzugt mindestens 75 mol-% der Reste $R^1$ für $CH_2$-CH(OH)-[$CH_2$-O]$_{p'}$-R stehen, worin p' = 0 oder 1 ist.

Diese Spezies stellen den Hauptbestandteil der Epoxid-Amin-Addukte dar und sind im Umsetzungsprodukt aus (A) und (B) in einer Menge von vorzugsweise mindestens 50 Gew.-%, besonders bevorzugt 60 Gew.-% und ganz besonders bevorzugt 70 Gew.-% enthalten. Ganz besonders bevorzugt besteht das Epoxid-Amin-Addukt vor einer gegebenenfalls durchgeführten Versalzung, Quaternisierung oder anderweitigen Modifikation aus Spezies der allgemeinen Formel (III). Da es sich beim Umsetzungsprodukt von (A) und (B) um ein Addukt handelt, entspricht hierin das Gewicht des Umsetzungsprodukts der Summe der Gewichte der Einwaagen aus (A) und (B). Gegebenenfalls vorhandene Verunreinigungen in (A) und/oder (B), die nicht zu einem entsprechenden Umsetzungsprodukt führen können, bleiben dabei unberücksichtigt.

Wenn als Monoepoxide (B) Monoglycidylether eingesetzt werden gilt p = 1.

Erfindungsgemäße Epoxid-Amin-Addukte der allgemeinen Formeln (III) mit p = 0 werden erhalten, wenn als Epoxidverbindungen Olefinmonooxide eingesetzt werden.

Für die bevorzugte Herstellung der erfindungsgemäßen linearen amino-funktionellen Polymere werden Monoepoxide (A) in einem solchen stöchiometrischen Verhältnis eingesetzt, dass auf 1 Äquivalent primärer Aminogruppe zwischen 1,35 und 2,0 Äquivalente Epoxidgruppen zur Reaktion gebracht werden. Dabei werden die Epoxidverbindungen in der Regel vollständig umgesetzt, wobei durch die Reaktionsführung die Bildung von nicht unter die Formel (III) fallenden Produkten unterdrückt wird.

**Versalzungs- und Quaternisierungs-Produkte der Epoxid-Amin-Addukte**

Zu den Epoxid-Amin-Addukten der Erfindung zählen auch deren Versalzungs- und Quaternisierungsprodukte. Die in den erfindungsgemäßen Epoxid-Amin-Addukten, enthaltenen tertiären und sekundären Aminogruppen, können mit Säuren HX zu Ammoniumsalzen - wie in Formel (IVa) dargestellt - und mit Quaternisierungsmitteln, insbesondere Alkylierungs- und/oder Aralkylierungsmitteln $R^2Y$ zu quartären Ammoniumverbindungen - wie in Formel (IVb) dargestellt - umgesetzt werden.

In Formel (IVa)

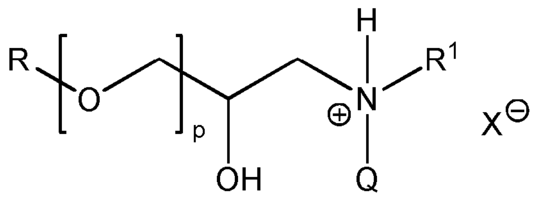

(IVa)

sind Q, R, $R^1$ und p wie in Formel (III) definiert sind, und
$X^{\ominus}$ steht für ein Säureanion, vorzugsweise ein Säureanion einer Säure gewählt aus der Gruppe der Carbonsäuren, Sulfonsäuren und sauren Phosphorsäureester.

In Formel (IVb)

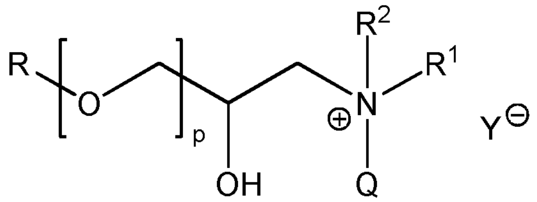

(IVb)

sind Q, R und p wie in Formel (III) definiert sind,
$R^1$ steht für $CH_2$-CH(OH)-$[CH_2\text{-}O]_{p'}$-R, worin p' = 0 oder 1 ist,
$R^2$ steht für einen aliphatischen Rest mit 4 bis 20 Kohlenstoffatomen, einen aromatischen Rest mit 6 bis 14 Kohlenstoffatomen oder araliphatischen Rest mit 7 bis 30 Kohlenstoffatomen, und
$Y^{\ominus}$ für ein Anion gewählt aus der Gruppe bestehend aus Halogeniden und Sulfat steht oder $Y^{\ominus}$ mit dem Rest $R^2$ einen Rest $R^2$- $Y^{\ominus}$ bildet worin $R^2$ für einen Rest $CH_2$ steht und $Y^{\ominus}$ für $COO^{\ominus}$ steht.

Steht $Y^{\ominus}$ für eine Gruppe $COO^{\ominus}$, die kovalent an $R^2$ gebunden ist, wobei $R^2$ für einen Methylenrest steht, so spricht man auch von einer Betain-Struktur. Bei der Spezies der Formel (IVb) handelt es sich dann um ein sogenanntes Zwitterion. Eine derartige Quaternisierung kann beispielsweise durch Umsetzung einer Spezies der Formel (III) mit Chloressigsäure erhalten werden.

Daher sind weitere Gegenstände der vorliegenden Erfindung Salze und Quaternisierungsprodukte der erfindungsgemäßen Epoxid-Amin-Addukte.

Zur Versalzung der erfindungsgemäßen Epoxid-Amin-Addukte können organische oder anorganische Säuren und saure Teilester der organischen und anorganischen Säuren verwendet werden (HX). Als anorganische Säuren dienen beispielsweise Halogenwasserstoffsäuren wir Chlorwasserstoffsäure (HCl), Schwefelsäuren und Phosphorsäuren. Bevorzugt sind jedoch organische Säuren wie beispielsweise Carbonsäuren, Sulfonsäuren und saure Phosphorsäureester wie beispielsweise deren Mono- und Diester.

Zur Quaternisierung der erfindungsgemäßen Epoxid-Amin-Addukte können alle üblichen Quaternisierungsmittel verwendet werden wie beispielsweise Alkylierungsmittel. Beispiele geeigneter Alkylierungsmittel sind Alkyl- und Aralkylhalogenide und -sulfate, wie Benzylchlorid, Methyliodid oder Dimethylsulfat. Es sind aber auch Kombinationen von Mono-Epoxidverbindungen und Säuren als Alkylierungsmittel oder Aralkylierungsmittel geeignet, womit hydroxylierte Alkylgruppen bzw. hydroxylierte Aralkylgruppen eingeführt werden. Beispiele für Mono-Epoxidverbindungen sind in diesem Zusammenhang Ethylenoxid, Propylenoxid, Butylenoxid, Styroloxid und Glycidylether, wie Ethylhexylglycidylether, Phenylglycidylether und Kresylglycidylether oder auch Alphaolefinoxide wie C8-Olefinoxid oder C16-Olefinoxid.

**Weitere Umsetzungsprodukte der Epoxid-Amin-Addukte**

Die bei der Herstellung der Epoxid-Amin-Addukte (III) durch Epoxidringöffnung gebildeten OH-Gruppen, welche auch in den Spezies der Formeln (IVa) und (IVb) enthalten sind, können beispielsweise ganz oder teilweise mit Lactonen, wie Propiolacton, Valerolacton, Butyrolacton, Caprolacton und/oder alkylierten, insbesondere Methylgruppen tragenden Lactonen unter Lacton-Ringöffnung reagieren. Die Addition eines Lactonmoleküls wird nach dem Fachmann bekannten Verfahren bei Temperaturen von etwa 70° C bis 180°C durchgeführt. Besonders bevorzugte Lactone sind ε-Caprolacton und δ-Valerolacton. Wird mehr als ein Lactonmolekül an eine derartige Hydroxylgruppe addiert, so spricht man auch von einer Ringöffnungspolymerisation.

Neben Lactonen können insbesondere auch Lactide und Hydroxycarbonsäuren, insbesondere offenkettige Hydroxy-Fettsäuren wie Castoröl oder Ricinolsäure zur Veresterung oder Polyesterbildung (analog zur Lacton(poly)addition) mit besagten Hydroxylgruppen eingesetzt werden, wobei im Falle der Reaktion mit Hydroxycarbonsäuren eine (Poly)kondensationsreaktion stattfindet.

Außerdem können an einem Teil oder allen besagten OH-Gruppen der Alkoxylierungsreaktionen mit Mono-Epoxidverbindungen vorgenommen werden, wobei üblicherweise im stark Basischen mit Katalysatoren wie KOH und bei Temperaturen von 100°C bis 160°C gearbeitet wird. Beispiele für Mono-Epoxidverbindungen sind in diesem Zusammenhang Ethylenoxid, Propylenoxid, Butylenoxid, Styroloxid und Glycidylether, wie Ethylhexylglycidylether, Phenylglycidylether und Kresylglycidylether oder auch Alphaolefinoxide wie C8-Olefinoxid oder C16-Olefinoxid.

Eine vollständige oder teilweise Umsetzung der besagten OH-Gruppen mit Monoisocyanaten, beispielsweise Monoaddukten aus Diisocyanaten und Monoalkoholen wie Monohydroxypolyethern ist ebenfalls möglich.

Die vorgenannten Umsetzungsprodukte der Spezies der Formel (III) können wiederum mit gleichen Mitteln und in gleicher Art und Weise versalzt und/oder quaternisiert werden wie die Spezies der Formel (III) selbst. Alternativ können auch die OH-Gruppen in den Spezies der allgemeinen Formeln (IVa) und (IVb) in gleicher Weise umgesetzt werden wie die OH-Gruppen der Spezies der Formel (III).

Neben den vorgenannten Umsetzungen der durch Epoxidringöffnung entstandenen Hydroxylgruppe mit Lactonen, Lactiden, Hydroxycarbonsäuren und/oder Monoisocyanaten können analoge Reaktionen an der Gruppe $-NQR^1$ der Formel (III) erfolgen, wenn $R^1$ für Wasserstoff steht. Die Gruppe -NHQ reagiert dann analog der Hydroxylgruppe.

**Verfahren zur Herstellung der Epoxid-Amin-Addukte**

Die erfindungsgemäßen Epoxid-Amin-Addukte können durch ein Verfahren erhalten werden, bei welchem eines oder mehrere primäre Amine (A) der allgemeinen Formel (I)

$$Q\text{-}NH_2 \quad (I),$$

mit einem oder mehreren Monoepoxiden (B) der allgemeinen Formel (II)

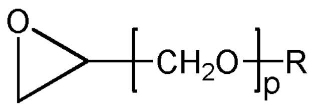

(II)

umgesetzt werden, und
wobei

Q für einen Rest mit $R^t\text{-}[OEt]_n[OPr]_m[OBu]_s\text{-}$ steht, wobei
$R^t$ für einen Rest gewählt aus Alkylresten mit 1 bis 6 Kohlenstoffatomen steht,
OEt für einen Ethylenoxid-Rest, OPr für einen Propylenoxid-Rest und OBu für einen Butylenoxid-Rest steht,
n für eine Zahl von 0 bis 100, m für eine Zahl von 3 bis 50 und s für eine Zahl von 0 bis 20 steht und n+m+s = 3 bis 170 beträgt,
R für einen organischen Rest steht, gewählt aus aliphatischen Resten mit 4 bis 24 Kohlenstoffatomen, aromatischen Resten mit 6 bis 18 Kohlenstoffatomen und araliphatischen Resten mit 7 bis 34 Kohlenstoffatomen, und p für 0 oder 1 steht,

wobei

(i)das oder die primären Amine (A) und das oder die Monoepoxide (B) in einem Verhältnis (A):(B) von 1:2 bis 1:1,35, vorzugsweise 1:1,90 bis 1:1,50, besonders bevorzugt 1:1,85 bis 1:1,70 umgesetzt werden und

(ii) mindestens 40 mol-% der Reste R gewählt sind aus aromatischen Resten mit 6 bis 18 Kohlenstoffatomen und araliphatischen Resten mit 7 bis 24 Kohlenstoffatomen, vorzugsweise aromatischen Resten mit 6 bis 20 Kohlenstoffatomen, besonders bevorzugt aromatischen Resten mit 6 oder 7 Kohlenstoffatomen.

Die Umsetzung erfolgt vorzugsweise unter Verwendung von Katalysatoren. Prinzipiell können für die Epoxid-Amin-Addition Katalysatoren mit tertiären Aminogruppen eingesetzt werden. Hierzu zählen insbesondere wenig flüchtige oder im Wesentlichen nicht flüchtige tertiäre Amine wie insbesondere Triethylendiamin (DABCO). In vielen Fällen läuft die Reaktion jedoch auch ohne Katalyse ab.

Vorzugweise erfolgt die Herstellung lösemittelfrei. Es ist jedoch auch möglich handelsübliche sich im Rahmen der Synthese weitestgehend, vorzugsweise möglichst vollständig inert verhaltende Lösemittel einzusetzen.

Die Reaktion wird vorzugsweise bei einer Temperatur von 80 bis 160 °C, besonders bevorzugt 120 bis 150 °C und ganz besonders bevorzugt 130 bis 150 °C durchgeführt, bis im Wesentlichen sämtliche Epoxidgruppen im Reaktionsgemisch verbraucht sind. Die typische Reaktionsdauer liegt im Bereich von 8 bis 24 h, wie beispielsweise im Bereich von 12 bis 20 h.

Die primäre Aminogruppe am primären Amin (A) kann mit zwei Epoxygruppen der Monoepoxide (B) zur Reaktion kommen, so dass sich (A):(B)-1:2-Addukte ($R^1 = CH_2-CH(OH)-[CH_2-O]_p-R$ in Formel (III)) bilden können. Vorzugsweise wird jedoch ein Überschuss des primären Amins eingesetzt, um eine möglichst vollständige Umsetzung aller Epoxidgruppen zu gewährleisten, das heißt das Verhältnis (A):(B) liegt vorzugsweise im Bereich von 1:1,90 bis 1:1,50. Dies bedeutet, dass in solchen Fällen auch in untergeordneter Menge ein (A):(B)-1:1-Addukt ($R^1$ = H in Formel (III)) gebildet wird.

Eine untergeordnete, nicht bevorzugte Nebenreaktion kann auch die Addition eines Monoepoxids (B) an Hydroxylgruppen der Spezies der Formel (III) darstellen. Das gesamte Reaktionsprodukt einschließlich der eventuellen Nebenprodukte eignet sich als Mischung im Rahmen der vorliegenden Erfindung als Netz- und Dispergiermittel.

Die so erhaltenen Epoxid-Amin-Addukte sind bereits als Netz- und Dispergiermittel verwendbar.

Sie können jedoch auch wie oben beschrieben in Form ihrer Salze und Quaternisierungsprodukte eingesetzt werden.

Zur Versalzung und/oder Quaternisierung werden die obigen Epoxid-Amin-Addukte vorzugsweise in einem polaren Lösemittel wie beispielsweise Propylenglykolmethyletheracetat (Dowanol PMA) und/oder Monopropylenglykolmonomethylether (Dowanol PM) zusammen mit der für die Versalzung eingesetzten Säure oder dem Quaternisierungsmittel gelöst.

Die Versalzung erfolgt vorzugsweise bei erhöhter Temperatur, besonders bevorzugt bei einer Temperatur im Bereich von 50 bis 120 °C, ganz besonders bevorzugt im Bereich von 60 bis 80 °C.

Die Reaktionsdauer liegt typischerweise im Bereich von 30 min bis 6 h, bevorzugt bei 1 bis 3 h.

Für die Quaternisierung werden unterschiedliche Verfahren genutzt.

Die Quaternisierung kann beispielsweise durch Einsatz von Monoepoxiden in Gegenwart einer organischen Säure erfolgen. Bevorzugt ist hierbei ein äquimolares Verhältnis der zu quaternisierenden Spezies mit und der zur Quaternisierung eingesetzten organischen Säure. Besonders geeignete Säuren sind hierbei die Benzoesäure und die p-Toluolsulfonsäure. Die Reaktion wird typischerweise bei etwa 120 °C für 2 bis 8 h, meist 4 h durchgeführt.

Die Quaternisierung kann aber beispielsweise auch durch Einsatz von Benzylchlorid, vorzugsweise 0,2 mol bis 0,9 mol bezogen auf die zu quaternisierende Spezies, erfolgen.

Diese Reaktion wird ebenfalls typischerweise bei etwa 120 °C für 2 bis 8 h, meist 4 h durchgeführt.

Bei einer Quaternisierung mit beispielsweise Monochloressigsäure ist zu bedenken, dass bei der Quaternisierungsreaktion pro eingesetztem Mol Monochloressigsäure ein Mol Chlorwasserstoffsäure gebildet wird, welche wiederum als Versalzungsmittel HX wirkt und an das Stickstoffatom der Spezies der Formel (III) bindet. Diese Reaktion wird ebenfalls typischerweise bei etwa 120 °C für 2 bis 8 h, meist 4 h durchgeführt.

Selbstverständlich ist es auch möglich verschiedene Quaternisierungsmittel zu kombinieren. Werden Quaternisierungsmittel kombiniert eingesetzt und handelt es sich bei einem der Quaternisierungsmittel um Monochloressigsäure, so wird diese vorzugsweise in kleinen Mengen von bis zu 0,25 Mol, besonders bevorzugt bis zu 0,2 Mol oder bis zu 0,1 Mol bezogen auf ein Mol des zu quaternisierenden Stickstoffs in den Spezies der Formel (III) eingesetzt. Die Reaktionsbedingungen entsprechen den oben genannten.

## Erfindungsgemäße Dispersionen

Die Erfindung betrifft auch Dispersionen, welche ein Dispergiermedium sowie mindestens eine Art eines dispergierten partikulären Feststoffs und mindestens ein erfindungsgemäßes Epoxid-Amin-Addukt enthalten. Beim Feststoff handelt es sich vorzugsweise um einen anorganischen oder organischen Füllstoff, ein anorganisches oder organisches Pigment oder um eine von üblichen Füllstoffen und Pigmenten verschiedene Erscheinungsform des Kohlenstoffs, wobei die verschiedenen Erscheinungsformen des Kohlenstoffs hierin mit Ausnahme der Pigmentruße formal zu den Füllstoffen

gezählt werden. In der Literatur existiert ebenfalls keine genaue Abgrenzung zwischen Pigmenten und Füllstoffen. Häufig wird jedoch der Brechungsindex (Brechzahl) herangezogen, um zwischen Pigmenten und Füllstoffen zu unterscheiden. Üblicherweise besitzen Pigmente einen Brechungsindex von ≥ 1,7 während der Brechungsindex von Füllstoffen üblicherweise < 1,7. Eine scharfe Unterscheidung dieser Art spielt jedoch im Rahmen der Erfindung keine entscheidende Rolle.

Bezogen auf das Gesamtgewicht der Dispersion werden die erfindungsgemäßen Epoxid-Amin-Addukte und/oder Netz- und Dispergiermittel vorzugsweise in einer Menge von 0,1 bis 10 Gew.-%, besonders bevorzugt 0,3 bis 4,5 Gew.-%, und ganz besonders bevorzugt 0,5 bis 4 Gew.-% eingesetzt.

Bevorzugt ist die erfindungsgemäße Dispersion gewählt aus der Gruppe bestehend aus Tinten, Druckfarben, Beschichtungsmitteln, insbesondere Lacken, Farben, Pigmentpasten, Füllstoffpasten, Pigmentkonzentraten, Keramikmaterialien, Kosmetika, Gießmassen, Formmassen und insbesondere Polymerbetonmassen.

Im Gegensatz zu gewöhnlichem Beton enthält der sogenannte Polymerbeton (auch als Mineralguss bezeichnet) eines oder mehrere Polymere als Bindemittel, welche die weiteren Füllstoffe (Zuschlagmittel), worunter insbesondere die Gesteinskörnung fällt, zusammenhalten. Das üblicherweise in gewöhnlichem Beton eingesetzte hydraulische Bindemittel Zement wird im Polymerbeton, wenn überhaupt, nur als Füllstoff, also als Erweiterung der Gesteinskörnung in den Feinstkornbereich hinein eingesetzt und übernimmt üblicherweise keine Bindewirkung. Die verbreitetste Polymermatrix für Polymerbeton sind ungesättigte Polyesterharze (UP-Harze). Häufig eingesetzt werden jedoch auch Epoxidharze. Aufgrund ihrer äußerst geringen Neigung zur Schrumpfung und ihrer niedrigen Viskosität werden jedoch auch Harze auf Poly(meth)acrylat-Basis, beispielsweise Poly(methylmethacrylat)-Basis eingesetzt.

Füllstoffe, bilden je nach Rezeptur vorzugsweise mindestens 80 Gew.-% bis über 90 Gew.-%, beispielsweise bis 92 oder 94 Gew.-% bezogen auf das Gesamtgewicht der Polymerbetonmasse. Es können natürliche und künstliche Stoffe von unterschiedlicher Korngröße verwendet werden, vorwiegend Kies von Hartgesteinen. Teilweise werden als Füllstoffe auch nichtmineralische Zusätze (Stahl, Glas) beispielsweise in Faserform beigemischt. Im Rahmen dieser Erfindung zählen zu den Füllstoffen eines Polymerbetons auch Pigmente, insbesondere solche, die der Farbgebung dienen. Da die Polymerbetoneigenschaften durch die Eigenschaften der Füllstoffe und die Rezeptur, also die Anteile der Füllstoffe und des Harzes und gegebenenfalls Härters sowie teilweise weiterer Additive, bestimmt sind, bestehen spezifische Anforderungen an deren Dichte, Zugfestigkeit und Druckfestigkeit, den E-Modul, den thermischen Ausdehnungskoeffizienten und die Wärmeleitfähigkeit.

Die Größe und Zusammensetzung der Füllstoffe und die herzustellenden Formen beeinflussen sich gegenseitig. Je größer der Bindemittelanteil, desto flüssiger wird der Polymerbeton und desto besser lässt sich dieser vergießen. Gegenläufig dazu sinken die mechanischen Eigenschaften des Polymerbetons mit steigendem Bindemittelanteil. Um eine gute Kompaktierung und Homogenität des Materials zu erreichen, müssen die kleinsten Wandstärken ein Mehrfaches der maximalen Füllstoffkorngröße betragen. Ebenfalls möglich ist es, einen geschäumten Polymerbeton unter Einsatz von Treibmitteln herzustellen. Geschäumter Polymerbeton besitzt typischerweise eine geringere Dichte und geringere Wärmeleitfähigkeit.

Das Bindemittel, auch Matrix genannt, besteht aus Harz und gegebenenfalls Härter und bildet vorzugsweise 5 bis 20 Gew.-% bezogen auf das Gesamtgewicht der Polymerbetonmasse. Das Bindemittel dient häufig auch als Schmiermittel während der Verarbeitung. Füllstoffe und Bindemittel sollten vorzugsweise chemisch inert zueinander sein.

Weitere Bestandteile einer Polymerbetonmasse sind Additive wie beispielsweise Härtungskatalysatoren und/oder Initatoren, Netz- und Dispergiermittel, Haftvermittler, Verlaufmittel oder Entschäumer. Insbesondere die Netz- und Dispergiermittel beeinflussen die Viskosität, jedoch auch die Oberflächengüte und bei gefärbten Polymerbetonprodukten die Farbstärke im pigmentierten gehärteten Produkt, das heißt der Polymerbetonmasse nach deren Härtung. In den erfindungsgemäßen Polymerbetonmassen werden daher die erfindungsgemäßen Epoxid-Amoin-Addukte bzw. die erfindungsgemäßen Netz- und Dispergiermittel eingesetzt. Bevorzugte Einsatzmengen der erfindungsgemäßen Epoxid-Amin-Addukte bzw. der erfindungsgemäßen Netz- und Dispergiermittel bezogen auf das Gesamtgewicht der erfindungsgemäßen Polymerbetonmassen betragen 0,1 bis 2 Gew.-%, besonders bevorzugt 0,1 bis 1 Gew.-% und ganz besonders bevorzugt 0,1 bis 0,5 Gew.-%.

Bevorzugte Polymerbetonmassen sind demgemäß solche, umfassend

(a) mindestens 80 Gew.-% Füllstoffe,

(b) mindestens 5 Gew.-% eines oder mehrerer Polymere als Bindemittel gewählt aus der Gruppe bestehend aus ungesättigten Polyesterharzen, Epoxidharzen und Poly(meth)acrylaten, vorzugsweise ausschließlich ungesättigten Polyesterharzen, und

(c) 0,1 bis 2 Gew.-% eines oder mehrerer der erfindungsgemäßen Epoxid-Amin-Addukte bzw. der erfindungsgemäßen Netz- und Dispergiermittel sowie

(d) gegebenenfalls weitere Additive, vorzugsweise gewählt aus der Gruppe der Härtungskatalysatoren, Härtungsinitiatoren, Haftvermittler, Verlaufmittel und Entschäumer,

wobei die gewichtsprozentualen Anteile auf das Gesamtgewicht der Polymerbetonmasse bezogen sind und sich die Bestandteile zu 100 Gew.-% addieren.

Besonders bevorzugte Polymerbetonmassen sind solche, umfassend

(a) mindestens 80 Gew.-% Füllstoffe,
(b) 5 bis 15 Gew.-%, vorzugsweise 7 bis 13 Gew.-% eines oder mehrerer Polymere als Bindemittel gewählt aus der Gruppe bestehend aus ungesättigten Polyesterharzen, Epoxidharzen und Poly(meth)acrylaten, vorzugsweise ausschließlich ungesättigten Polyesterharzen, und
(c) 0,1 bis 1 Gew.-% eines oder mehrerer der erfindungsgemäßen Epoxid-Amin-<Addukte bzw. der erfindungsgemäßen Netz- und Dispergiermittel sowie
(d) 0,1 bis 3 Gew.-% weitere Additive, vorzugsweise gewählt aus der Gruppe der Härtungskatalysatoren, Härtungsinitiatoren, Haftvermittler, Verlaufmittel und Entschäumer,

wobei die gewichtsprozentualen Anteile auf das Gesamtgewicht der Polymerbetonmasse bezogen sind und sich die Bestandteile zu 100 Gew.-% addieren.

Prinzipiell können die Polymerbetonmassen auch mit Wasser und Zement kombiniert werden wie dies beispielsweise bei Polymerzementbeton ("polymer cement concrete"; PCC) der Fall ist.

**Verwendung der Epoxid-Amin-Addukte als Netz- und Dispergiermittel**

Schließlich betrifft die Erfindung auch die Verwendung des erfindungsgemäßen Epoxid-Amin-Addukts als Netz- und Dispergiermittel sowie Netz- und Dispergiermittel enthaltend oder bestehend aus den erfindungsgemäßen Epoxid-Amin-Addukten.

Das erfindungsgemäße Epoxid-Amin-Addukt wird insbesondere in den für Dispergiermittel bekannten Einsatzgebieten verwendet. Beispielsweise bei der Herstellung oder Verarbeitung von Lacken, Druckfarben, Papierstrich, Leder- und Textilfarben, Pasten, Pigmentkonzentraten, Keramikmaterialien oder kosmetischen Zubereitungen und zwar insbesondere dann, wenn diese Produkte partikuläre Feststoffe wie Pigmente und/oder Füllstoffe, enthalten.

Auch bei der Herstellung oder Verarbeitung von Gieß- und/oder Formmassen auf Basis von synthetischen, halbsynthetischen oder natürlichen makromolekularen Stoffen wie Polyvinylchlorid, gesättigten oder ungesättigten Polyestern, Polyurethanen, Polystyrolen, Polyacrylaten, Polyamiden, Epoxidharzen, Polyolefinen wie Polyethylen oder Polypropylen, kann das erfindungsgemäße Epoxid-Amin-Addukt eingesetzt werden. Beispielsweise lassen sich entsprechende Epoxid-Amin-Addukte zur Herstellung von SMC/BMC-Massen, Gießmassen, Polymerbeton auf Basis ungesättigter Polyesterharze, PVC-Plastisolen, Gelcoats, Leiterplatten, Industrielacken, Holz- und Möbellacken, Fahrzeuglacken, Schiffsfarben, Korrosionsschutzfarben, Can- und Coil-Coatings und Maler- und Bautenlacken verwenden. Beispiele für übliche Hauptbindemittel in derartigen Systemen sind Harze auf Basis von Polyurethanen, Cellulosenitraten, Celluloseacetobutyraten, Alkydharzen, Melaminharzen, Polyestern, Chlorkautschuken, Epoxidharzen und Acrylatharzen. Beispiele für Beschichtungen auf Wasserbasis sind kathodische oder anodische Elektrotauchlackierungen zum Beispiel für Automobilkarosserien. Weitere Beispiele sind Putze, Silikatfarben, Dispersionsfarben, Wasserlacke auf Basis von wasserverdünnbaren Alkydharzen, Alkydemulsionen, Hybridsystemen, 2-Komponenten-Systemen, Polyurethan- und Acrylat-Dispersionen.

Die erfindungsgemäßen Epoxid-Amin-Addukte eignen sich insbesondere auch als Dispergiermittel zur Herstellung von Feststoffkonzentraten, wie Pigmentkonzentraten. Dazu werden beispielsweise die Epoxid-Amin-Addukte in einem Trägermedium wie organischen Lösemitteln, gegebenenfalls Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den Epoxid-Amin-Addukten ist es aber insbesondere möglich, stabile bindemittelfreie Pigmentkonzentrate herzustellen. Ebenso ist es möglich, mit den erfindungsgemäßen Epoxid-Amin-Addukten fließfähige Feststoffkonzentrate aus Pigmentpresskuchen herzustellen. Hierbei werden dem Presskuchen, der noch organische Lösemittel, Weichmacher und/oder Wasser enthalten kann, die Epoxid-Amin-Addukte zugemischt und die so erhaltene Mischung dispergiert. Die auf verschiedenen Wegen hergestellten Feststoffkonzentrate können dann in unterschiedliche Substrate wie beispielsweise Alkydharze, Polyesterharze, Acrylatharze, Polyurethanharze oder Epoxidharze eingearbeitet werden.

Partikuläre Feststoffe, insbesondere jedoch Pigmente und/oder Füllstoffe, können aber auch lösemittelfrei direkt in den Epoxid-Amin-Addukten dispergiert werden und eignen sich dann besonders zur Pigmentierung von thermoplastischen und duroplastischen Kunststoffformul ierungen.

Die Erfindung betrifft daher auch eine Partikelzubereitung enthaltend 5,0 bis 99,9 Gew.% eines oder mehrerer partikulärer Feststoffe sowie 0,1 bis 95,0 Gew.% eines oder mehrerer erfindungsgemäßer Epoxid-Amin-Addukte bzw. Netz- und Dispergiermittel bezogen auf das Gesamtgewicht der Partikelzubereitung. Bei den Partikelzubereitungen handelt es sich vorzugsweise um Pigmentzubereitungen oder Pigment-Füllstoff-Zubereitungen, auch als Pigmentpräparationen oder Pigment-Füllstoff-Präparationen bezeichnet. Die partikulären Feststoffe, insbesondere die Pigmente und/oder Füllstoffe liegen in den vorgenannten Zubereitungen beziehungsweise Präparationen üblicherweise in höherer Konzentration vor als in den späteren Anwendungen. Als Trägermaterial für die partikulären Feststoffe kann im einfachsten Fall das erfindungsgemäße Epoxid-Amin-Addukt dienen, so dass in einem solchen Fall die Präparationen zu 5,0 bis 99,9 Gew.% aus einem oder mehreren partikulären Feststoffen sowie 0,1 bis 95,0 Gew.% aus einem oder mehreren erfindungsgemäßen Epoxid-Amin-Addukten besteht.

Die Partikelzubereitungen können jedoch auch vom Netz- und Dispergiermittel verschiedene Bindemittel, einschließlich anderer Additive und/oder organische Lösemittel und/oder Wasser enthalten. Die Partikelzubereitungen können in fester Form, beispielsweise als Pulver, Chips oder Granulate oder flüssiger Form vorliegen. Bei flüssigen Pigmentpräparationen oder Pigment-Füllstoff-Präparationen spricht man in Abhängigkeit des Pigmentanteils oder Pigment- und Füllstoffanteils auch von Farbkonzentraten, Pigmentpasten, Volltonpasten, Nuancier- oder Abtönpasten oder von Pigmentteigen.

Die erfindungsgemäßen Partikelzubereitungen, insbesondere die Pigmentzubereitungen oder Pigment-Füllstoff-Zubereitungen werden vorzugsweise bei der Lack-, Druckfarben- und Kunststoffherstellung verwendet.

Die Epoxid-Amin-Addukte können vorteilhaft auch bei der Herstellung von Tinten für "Non-Impact"-Druckverfahren wie "Thermal-Inkjet" und dem "Bubblejet-Verfahren" verwendet werden. Diese Tinten können beispielsweise wässrige Tintenformulierungen, lösemittelbasierte Tintenformulierungen, lösemittelfreie oder lösemittelarme Tinten für UV-Applikationen als auch wachsartige Tinten sein.

Die Epoxid-Amin-Addukte können vorteilhaft auch bei der Herstellung von Farbfiltern für Flüssigkristallanzeigen, -bildschirme, Farbauflösungsgeräte, Sensoren, Plasmabildschirme, Anzeigen auf Basis der SED (Surface conduction Electron emitter Display) und für MLCC (Multi Layer Ceramic Capacitors) verwendet werden. Hierbei kann der flüssige Farbfilterlack, der auch Color Resist genannt wird, durch verschiedenste Applikationsverfahren wie Spin Coating, Aufrakeln, Kombination beider Verfahren oder über "non impact"-Druckverfahren wie zum Beispiel Inkjet-Verfahren aufgetragen werden. Die MLCC-Technologie wird bei der Herstellung von Mikrochips und Leiterplatten verwendet.

Die Epoxid-Amin-Addukte können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen (Water-in-Oil oder Oil-in-Water-Emulsionen), Lösungen, Gele, Cremes, Lotionen oder Sprays, vorliegen. Die Epoxid-Amin-Addukte können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, z.B. organische und anorganische Pigmente wie Titandioxid oder Eisenoxid, enthalten.

Ein derartiges Dispergiermittel kann schließlich auch zur Herstellung eines pigmentierten Überzuges auf einem Substrat verwendet werden, wobei ein pigmentiertes Beschichtungsmittel auf das Substrat aufgebracht wird und wobei das auf das Substrat aufgebrachte pigmentierte Beschichtungsmittel eingebrannt oder anderweitig ausgehärtet bzw. vernetzt wird.

Die Epoxid-Amin-Addukte können alleine oderzusammen mit üblichen Bindemitteln eingesetzt werden. Beim Einsatz in Polyolefinen kann es z. B. vorteilhaft sein, entsprechende niedermolekulare Polyolefine als Trägermaterialien zusammen mit dem erfindungsgemäßen Epoxid-Amin-Addukt einzusetzen.

Eine mögliche Verwendung der erfindungsgemäßen Epoxid-Amin-Addukte besteht auch in der Herstellung dispergierbarer pulverpartikel- und/oder faserpartikelförmiger Feststoffe, insbesondere von dispergierbaren Pigmenten oder Füllstoffen, insbesondere Kunststofffüllstoffen, wobei die Partikel mit dem erfindungsgemäßen Epoxid-Amin-Addukt beschichtet sind. Derartige Beschichtungen von organischen wie auch anorganischen Feststoffen werden in bekannter Weise ausgeführt. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz der Epoxid-Amin-Addukte zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke gegenüber nicht behandelten Pigmenten aus.

Beispiele für im Rahmen der vorliegenden Erfindung geeignete anorganische Pigmente sind Oxid- und Oxidhydroxid- sowie komplexe anorganische Pigmente wie beispielsweise Titandioxidpigmente, Eisenoxidpigmente, Chromoxidpigmente, Bismutvanadatpigmente, komplexe anorganische Buntpigmente beispielsweise mit Rutil- oder Spinellgitter oder oxidische keramische Farbkörper; Sulfid- und Sulfidselenidpigmente wie beispielsweise Zinksulfidpigmente und Cadmiumpigmente; Bleichromatpigmente wie beispielsweise Chromgelbpigmente, Molybdatrotpigmente und Chromgrün- und Chromechtgrünpigmente; Komplexsalzpigmente wie beispielsweise Cyanidpigmente (Eisenblau); Silikatpigmente wie beispielsweise Ultramarinpigmente; Effektpigmente wie beispielsweise plättchenförmige Aluminium-, Goldbronze- und Zinkpigmente, Perlglanzpigmente, Effektpigmente auf Eisenoxidbasis, Effektpigmente auf metallischer Basis, Color Variable Pigmente und cholesterische Effektpigmente; Korrosionsschutzpigmente wie beispielsweise Zinkstaub, Phosphatpigmente, Zinkoxid/Zinkweiß, Eisenglimmer und Korrosionsschutzpigmente auf Titandioxid-Basis; und

Pigmentruße wie beispielsweise Furnaceruße, Gasruße und Flammruße.

Beispiele für im Rahmen der vorliegenden Erfindung geeignete organische Pigmente sind Azopigmente wie beispielsweise Monoazopigmente, Diazopigmente, Polyazopigmente und Metallkomplexpigmente; polyzyklische Pigmente wie beispielsweise Kupferphthalocyanine, Diketo-Pyrrolo-Pyrrole (DPP), Chinacridone, Isoindolinone, Isoindoline, Perylene und Perinone; Fluoreszenz- und Phosphoreszenzpigmente; und organische Schwarzpigmente.

Beispiele für im Rahmen der vorliegenden Erfindung geeignete Füllstoffe sind Silikate wie beispielsweise natürliche Kieselsäuren, zum Beispiel Quarz, Cristobalit und Quarzgut, Kieselgur, Talk, Kaolin, Glimmer, Feldspat und Nephelinsyenit, Plastorit, Perlite, Asbest, Hornblende, Wollastonit und Kieselerde; synthetische Kieselsäuren und Silkate wie beispielsweise pyrogenes Siliciumdioxid, Fällungskieselsäuren, Natriumaluminiumsilikate, Calciumsilikate, plättchenförmige Kieselsäuren, hydrothermale Kieselsäuren, Schichtsilikate, Kieselgele, Aerogele, Kieselsole, beispielsweise Hydrosole und Organosol, und Glas; Carbonate als Füllstoffe wie beispielsweise natürliche Calciumcarbonatprodukte, gefälltes Calciumcarbonat, Dolomit, Bariumcarbonat und Magnesiumcarbonat; Sulfate wie beispielsweise, Bariumsulfat, Bohrspat, Chemiespat, Füllstoffspat und Blanc Fixe, Calciumsulfat; Aluminiumoxid und Aluminiumhydroxid; Siliciumcarbid, Flussspat, Schiefermehl und Graphit.

Beispiele für im Rahmen der vorliegenden Erfindung geeignete Erscheinungsformen des Kohlenstoffs, soweit sie nicht bereits unter dem Begriff der Pigmente oder Füllstoffe aufgeführt sind, sind beispielsweise amorpher Kohlenstoff, Kohlenstoff-Fasern, Glaskohlenstoff, Graphen, Fullerene, Diamant, Lonsdaleit, Aktivkohle, Kohlenstoffnanoröhren, Carbon Nanobuds, Kohlenstoffnanoschaum und Aerographit.

Weitere Beispiele für Pigmente und Füllstoffe finden sich beispielsweise im "Lehrbuch der Lacke und Beschichtungen" von Kittel, Bd. 5, aus dem S. Hirzel Verlag, 2003, 2. Auflage, "Pigmente, Füllstoffe, Farbmetrik".

Im Übrigen kann das erfindungsgemäße Epoxid-Amin-Addukt auch als Emulgator und Phasenvermittler (Verträglichkeitsvermittler flüssig/flüssig) eingesetzt werden.

Nachstehend soll die Erfindung anhand von Ausführungsbeispielen näher erläutert werden.

## BEISPIELE

### Messverfahren

Aminzahl

Unter der Aminzahl (AZ) wird die Menge KOH in mg verstanden, die dem Aminanteil von 1g Substanz entspricht. Die Aminzahl wird nach DIN 16945 durch eine Neutralisationsreaktion mit 0,1 n Perchlorsäure in Essigsäure als Titationsmittel bestimmt:

$$R\text{-}NH_2 + HClO_4 \rightarrow R\text{-}NH^{\ominus}{}_3ClO^{\ominus}{}_4$$

Die Zugaben inerter Lösemittel, wie Cyclohexan, Dioxan, Chlorbenzol, Aceton, Methylethylketon können die Titration sehr schwacher Basen verbessern.

Epoxyäquivalent

Unter dem Epoxid-Equivalentgewicht wird diejenige Menge Epoxidharz in g verstanden, die 16g epoxidisch gebundenen Sauerstoff (Epoxid-Sauerstoff) enthält.

Die Epoxidgruppen in Epoxidharzen lassen sich durch Addition von HBr an den Epoxidring bestimmen. Die equivalente Menge HBr wird dabei durch Titration mit $HClO_4$ in Gegenwart von Cetyltrimethylammoniumbromid (N,N,N-trimethyl-1-hexadecanaminium-bromid; CTABr) freigesetzt.

Da bei der Titration mit Perchlorsäure auch gleichzeitig das Amin protoniert wird, muss diese Menge an Perchlorsäure zur Berechnung des Epoxyäquivalents abgezogen werden. Daher ist es notwendig vor der Bestimmung des Epoxyäquivalents die Aminzahl zu bestimmen.

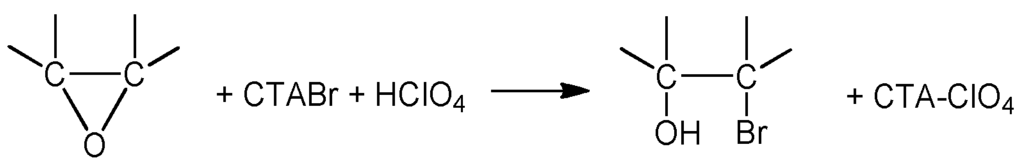

$$\text{Epoxidäquivalent} = \text{Einwaage (gr.)} * 1000 / (\text{Verbrauch (ml)} * n * f) - (\text{Aminzahl}/56{,}1)$$

n = Normalität des Titrationsmittels
f = Faktor des Titrationsmittels

Säurezahl

Die Säurezahl wird nach DIN EN ISO 2114 durch eine Neutralisationsreaktion mit 0,1 n KOH in Ethanol als Titrationsmittel bestimmt:

$$R\text{-}COOH + KOH \rightarrow R\text{-}COOK + H_2O$$

## Vergleichsbeispiele

Alle nicht erfindungsgemäßen Addukte und die unter Verwendung dieser hergestellten Pasten, Lacke und Polymerbetone sind hierin mit einem "*" gekennzeichnet.

### Epoxid-Amin-Addukt EA1*

82 g Epikote 828 (0,07 mol; unverdünntes difunktionelles Bisphenol-A-Epichlorhydrin-Umsetzungsprodukt, Hersteller Momentive) werden mit 528 g Jeffamin M 2070 (0,085 mol; methanolgestartetes Polyethermonoamin mit endständiger primärer Aminogruppe, ca. 10 OPr- und 31 OEt-Einheiten; Aminzahl = 27 mg KOH/g; Hersteller Huntsman) bei 140°C 27 h zur Reaktion gebracht.

Aminzahl: 19,6 mg KOH/g
Epoxyäquivalent: unendlich

### Epoxid-Amin-Addukt EA2*

82 g Epikote 828 (0,22 mol) werden mit 359 g Jeffamin M 2070 (0,177 mol) und 8,6 g Dimethylaminopropylamin (0,08 mol) bei 140°C 7 h zur Reaktion gebracht. Anschließend werden 145 g eines Polyether-Toluylendiisocyanat-Addukts (Herstellung siehe unten) hinzugegeben und bei 65°C weitere 5 h reagieren lassen.

Aminzahl: 21,7 mgKOH/g
Epoxyäquivalent: unendlich
Isocyanatgehalt: 0,05%

## Erfindungsgemäße Beispiele

### Epoxid-Amin-Addukt EA3

Kresylglycidylether (1,042 mol) wurden mit Jeffamin M2070 (0,573 mol, 10% Überschuss NH) bei 140°C 16 h zur Reaktion gebracht.

Aminzahl: 23,99 mg KOH/g
Epoxyäquivalent: unendlich

### Epoxid-Amin-Addukt EA4

Kresylglycidylether (1,042 mol) wurden mit Jeffamin M2005 (0,573 mol, 10% Überschuss NH) bei 140°C 16 h zur Reaktion gebracht.

Aminzahl: 22,54 mg KOH/g
Epoxyäquivalent: unendlich

**Epoxid-Amin-Addukt EA5**

Kresylglycidylether (1,042 mol) wurden mit Surfonamin L200 (0,546 mol, 5% Überschuss NH) bei 140°C 16 h zur Reaktion gebracht.

Aminzahl: 24 mg KOH/g
Epoxyäquivalent: unendlich

**Epoxid-Amin-Addukt EA6**

Kresylglycidylether (2,83 mol) wurden mit 1462,30 g Surfonamin L 100 (1,486 mol 5% Überschuss NH) bei 140°C 16 h zur Reaktion gebracht.

Aminzahl: 60 mg KOH/g
Epoxyäquivalent: unendlich

**Epoxid-Amin-Addukt EA7**

Kresylglycidylether (0,75 mol) und Grilonit RV1814 (0,762 mol) wurden mit Jeffamin M2070 (0,83 mol, 10% Überschuss NH) bei 140°C 16 h zur Reaktion gebracht.

Aminzahl: 22,9 mg KOH/g
Epoxyäquivalent: unendlich

**Epoxid-Amin-Addukt EA8**

Vikolox 16 (0,49 mol, C16-Alphaolefinoxid der Firma Arkema) und Kresylglycidylether (0,75 mol) wurden mit Jeffamin M2070 (0,68 mol) bei 140°C 16 h zur Reaktion gebracht.

Aminzahl: 22,9 mg KOH/g
Epoxyäquivalent: unendlich

**Epoxid-Amin-Addukt EA9 (Versalzung)**

49 g EA8 (0,02 mol) wird mit 2,35 g (0,02 mol) Benzoesäure in 8g Dowanol PMA bei 50°C 1 h zur Reaktion gebracht.

Aminzahl: 19,2 mg KOH/g
Säurezahl: 18,6 mg KOH/g
FK: 80%

**Epoxid-Amin-Addukt EA10 (Quaternisierung des versalzten Addukts EA9)**

29,2 g EA9 (0,01 mol) wird mit 1,67 g (0,01 mol) Kresylglycidylether in 0,42 g Dowanol PMA bei 120°C 4 h zur Reaktion gebracht.

Aminzahl: 18,4 mg KOH/g
Säurezahl: 17,0 mg KOH/g
FK: 80%

**Epoxid-Amin-Addukt EA11**

1000 g EA8 (0,41 mol) wird mit 46,8 g Benzylchlorid (0,37 mol) in 355 g Dowanol PM und 355g Dowanol PMA bei 120°C 4 h zur Reaktion gebracht.

Aminzahl: 2,0 mg KOH/g, Restgehalt Benzylchlorid < 500ppm (bestimmt via HPLC)
FK: 60%

**Nicht-erfindungsgemäßes Vergleichsbeispiel 1***

Das Vergleichsbeispiel wurde entsprechend der Vorschrift für Polymer 4 der internationalen Veröffentlichungsschrift WO 2016059066 A1 hergestellt.

**Anwendungstechnische Prüfung**

Verwendung der erfindungsgemäßen Polymere als Netz- und Dispergiermittel zur Herstellung von Pigmentkonzentraten und deren Einsatz in Lacksystemen.

**Ausgangsstoffe**

| | |
|---|---|
| Glanzlack 275 | Lacryl-PU Glanzlack, wasserbasierter Acryllack, PUverstärkt, Hersteller: Brillux |
| Heliogen Blau D 7086 | Blaupigment, Colorindex PB 15:3, Hersteller: |
| BASFHeliogen Grün L 8730 | Grünpigment, Colorindex PG 7, Hersteller: |
| BASFPermanent Orange RL 70 | Orangepigment, Colorindex PO 34, Hersteller: Clariant |
| Hostaperm Blau A2R | Blaupigment, Colorindex PB 15:0, Hersteller: Clariant |
| Rocima 512 | Biozidmischung aus Chlormethyl-/Methylisothiazolon, Octylisothiazolon und Bronopol, Hersteller: Dow Chemical |
| Preventol P 91 MV | Biozidmischung aus Isothiazolonen und Bronopol, Hersteller: Lanxess |
| Polyglykol P 400 | Polyglykol der Molmasse etwa 400 g/mol, Hersteller: Clariant |
| Arkopal N 100 | Nonylphenol-Ethoxylat, Hersteller: Clariant |
| Lansurf CO12 | Castor-Öl-Ethoxylat, Hersteller: Lankem |
| MAKON® TSP 25 | Polyarylphenyl-Ethoxylat, Hersteller: Stepan |
| Algene WF | Alkylamin-Ethoxylat, Hersteller: Huntsman |

**Die Herstellung von Pigmentpasten und Lackformulierungen**

Die Pigmentpasten PP wurden gemäß den Formulierungen in den nachfolgenden Tabellen 1 bis 4 hergestellt. Das Netz- und Dispergieradditiv bzw. Algene WF, Arkopal N100, Lansurf CO12 und MAKON TSP-25 (im Falle der Referenz-Pigmentpasten), PEG 400, VE-Wasser und Preventol P91 MV in dieser Reihenfolge in einen Becher eingewogen und mit einem Spatel per Hand homogenisiert. Anschließend wurde die jeweilige Menge Pigment portionsweise am Dispermat bei etwa 500 U/min (1,5 m/s) mit einer Zahnscheibe eingearbeitet. Anschließend wurden die Ansätze am Dispermat 10 Minuten bei 3000 U/min (9 m/s) homogenisiert. Danach wurde mit Schwefelsäure der pH-Wert eingestellt, der Ansatz mit Rocima 521 komplettiert und der Ansatz in eine Perlmühle überführt. Es wurde anschließend eine Stunde bei 2800 ±50 U/min mit SAZ-120-S-Perlen (0,6-0,8 mm) in der Perlmühle vermahlen.

**Tabelle 1**

| Pigment PB 15:3 | PP1a* | PP1b* | PP1e* | PP1f* | PP1c | PP1d |
|---|---|---|---|---|---|---|
| Algene WF | 9,4 | | | | | |
| Arkopal N 100 | 4,7 | | | | | |
| Vergleichsbeispiel 1* | | 14,1 | | | | |
| EA1* | | | 14,1 | | | |
| EA2* | | | | 14,1 | | |
| EA6 | | | | | 14,1 | |
| EA3 | | | | | | 14,1 |
| Polyglykol P 400 | 7,3 | 7,3 | 7,3 | 7,3 | 7,3 | 7,3 |
| VE-Wasser | 32,5 | 32,5 | 32,5 | 32,5 | 32,5 | 32,5 |
| Preventol P 91 MV | 0,14 | 0,14 | 0,14 | 0,14 | 0,14 | 0,14 |

(fortgesetzt)

| **Pigment PB 15:3** | **PP1a*** | **PP1b*** | **PP1e*** | **PP1f*** | **PP1c** | **PP1d** |
|---|---|---|---|---|---|---|
| Heliogen Blau D 7086 15:3 | 45,0 | 45,0 | 45,0 | 45,0 | 45,0 | 45,0 |
| $H_2SO_4$ 25%ig | 0,64 | 0,64 | 0,64 | 0,64 | 0,64 | 0,64 |
| Rocima 521 | 0,3 | 0,3 | 0,3 | 0,3 | 0,3 | 0,3 |
| **Summe der Gewichtsteile** | 100,0 | 100,0 | 100,0 | 100,0 | 100,0 | 100,0 |

**Tabelle 2**

| **Pigment PB 15:0** | **PP2a*** | **PP2b*** | **PP2c** | **PP2d** |
|---|---|---|---|---|
| Algene WF | 11,00 | | | |
| Lansurf CO12 | 7,90 | | | |
| Vergleichsbeispiel 1* | | 18,90 | | |
| EA6 | | | 18,90 | |
| EA3 | | | | 18,90 |
| Polyglykol P 400 | 6,00 | 6,00 | 6,00 | 6,00 |
| VE-Wasser | 31,30 | 31,30 | 31,30 | 31,30 |
| Preventol P 91 MV | 0,14 | 0,14 | 0,14 | 0,14 |
| Hostaperm Blau A2R 15:0 | 43,0 | 43,0 | 43,0 | 43,0 |
| $H_2SO_4$ 25%ig | 0,38 | 0,38 | 0,38 | 0,38 |
| Rocima 521 | 0,30 | 0,30 | 0,30 | 0,30 |
| **Summe der Gewichtsteile** | 100,0 | 100,0 | 100,0 | 100,0 |

**Tabelle 3**

| **Pigment PG 7** | **PP3a*** | **PP3d*** | **PP3e*** | **PP3b*** | **PP3c** |
|---|---|---|---|---|---|
| Algene WF | 9,0 | | | | |
| Arkopal N 100 | 4,5 | | | | |
| Vergleichsbeispiel 1* | | | | 13,5 | |
| EA1* | | 13,5 | | | |
| EA2* | | | 13,5 | | |
| EA6 | | | | | 13,5 |
| Polyglykol P 400 | 6,5 | 6,5 | 6,5 | 6,5 | 6,5 |
| VE-Wasser | 30,8 | 30,8 | 30,8 | 30,8 | 30,8 |
| Preventol P 91 MV | 0,14 | 0,14 | 0,14 | 0,14 | 0,14 |
| Heliogen Grün L 8730 | 48,0 | 48,0 | 48,0 | 48,0 | 48,0 |
| $H_2SO_4$ 25%ig | 0,76 | 0,76 | 0,76 | 0,76 | 0,76 |
| Rocima 521 | 0,30 | 0,30 | 0,30 | 0,30 | 0,30 |
| **Summe der Gewichtsteile** | 100,0 | 100,0 | 100,0 | 100,0 | 100,0 |

Tabelle 4

| Pigment PO 34 | PP4a* | PP4b | PP4c |
|---|---|---|---|
| Algene WF | 10,0 | | |
| MAKON TSP-25 | 5,5 | | |
| EA3 | | 15,50 | |
| EA11 | | | 15,50 |
| Polyglykol P 400 | 5,0 | 5,0 | 5,0 |
| VE-Wasser | 40,97 | 40,97 | 40,97 |
| Preventol P 91 MV | 0,14 | 0,14 | 0,14 |
| Permanent Orange RL 70 | 37,5 | 37,5 | 37,5 |
| $H_2SO_4$ 25%ig | 0,59 | 0,59 | 0,59 |
| Rocima 521 | 0,30 | 0,30 | 0,30 |
| **Summe der Gewichtsteile** | 100,0 | 100,0 | 100,0 |

Eine weiterverarbeitbare Formulierung der Pasten mit dem Dispergiermittel des nicht erfindungsgemäßen Vergleichsbeispiels 1* (Pigmentpasten: PP1b*, PP1e*, PP1f* PP2b* und PP3b*, PP3d*, PP3e*) konnte nicht erhalten werden, weil sich in diesen Fällen entweder eine starke Eindickung der Paste nach der Anreibung zeigte oder Gelteilchen zu erkennen waren.

Die erhaltenen Pigmentpasten, die hinsichtlich ihrer Viskosität in einem verarbeitbaren Bereich lagen, wurden im Verhältnis 3 Gewichtsteile Pigmentpaste zu 97 Gewichtsteilen Brillux Glanzlack 275 (weiß, Basis 40) abgemischt. Die Pasten wurden mit dem Spatel eingerührt und anschließend 3 Minuten mit dem Skandex Shaker homogenisiert (die Zusammensetzungen der Lackformulierungen ist aus Tabelle 5 ersichtlich). Der Lack wurde mit einer 150-$\mu$m-Kastenrakel auf eine Kontrastkarte aufgezogen und an einer Stelle ausgerieben. Die Lackfilme wurden für 5 bis 10 min bei 23 °C abgelüftet. Der Rubout-Test wurde direkt anschließend durchgeführt. Dann wurden die Filme bei 23 °C für 24 h ausgehärtet bevor die $\Delta$L-, $\Delta$a-, $\Delta$b- und $\Delta$E-Werte bestimmt wurden.

Tabelle 5

| Lackformulierung | Gewichtsteile / Brillux Glanzlack 275 (weiß Basis 40) | Gewichtsteile / Pigmentpaste |
|---|---|---|
| F1a* | 97 | 3/PP1a* |
| F1c | 97 | 3/PP1c |
| F1d | 97 | 3/ PP1 d |
| F2a* | 97 | 3/PP2a* |
| F2c | 97 | 3/ PP2c |
| F2d | 97 | 3/ PP2d |
| F3a | 97 | 3/ PP3a |
| F3c | 97 | 3/ PP3c |
| F4a* | 97 | 3/PP4a* |
| F4b | 97 | 3/ PP4b |
| F4c | 97 | 3/ PP4c |

Die Messung der Farbstärke und der L-, $\alpha$-, b- und $\Delta$E-Werte erfolgte mit dem Gerät Color Sphere Gloss (erhältlich von der Firma BYK Gardner), jeweils auf dem weißen Bereich der Kontrastkarte. Es wurden die Farbstärke in % und die $\Delta$L-, $\Delta$a-, $\Delta$b- und $\Delta$E-Werte bezogen auf die jeweilige Referenzformulierung, welche Netz- und Dispergieradditive aus dem Stand der Technik enthält, gemessen. Weiterhin wurden die $\Delta$L-, $\Delta$a-, $\Delta$b- und $\Delta$E-Werte des Rubouts im Vergleich zur unbelasteten Fläche gemessen.

Die Messergebnisse zu den einzelnen Lackformulierungen sind den Tabellen 6 bis 9 entnehmbar.

**Tabelle 6**

| Lackformulierung | F1a* | F1c | F1d |
|---|---|---|---|
| **Farbstärke gegen F1a*** | 100 | 106,8 | 104,8 |
| **Farbe gegen F1a*** | | | |
| ΔL | 0 | 1,76 | -0,29 |
| Δa | 0 | -1,35 | -0,68 |
| Δb | 0 | -1,54 | -0,77 |
| ΔE | 0 | 2,70 | 1,06 |
| Rubout | | | |
| ΔL | 1,84 | 0,23 | 0,11 |
| Δa | -1,26 | 0,02 | 0,01 |
| Δb | -1,92 | -0,08 | -0,09 |
| ΔE | 2,94 | 0,24 | 0,14 |

**Tabelle 7**

| Lackformulierung | F2a* | F2c | F2d |
|---|---|---|---|
| **Farbstärke gegen F2a*** | 100 | 103,5 | 102,00 |
| **Farbe gegen F2a*** | | | |
| ΔL | 0 | -0,22 | -0,19 |
| Δa | 0 | -0,57 | -0,08 |
| Δb | 0 | -0,73 | -0,37 |
| ΔE | 0 | 0,94 | 0,42 |
| **Rubout** | | | |
| ΔL | -0,74 | 0,55 | -0,15 |
| Δa | 0,22 | -0,03 | -0,01 |
| Δb | -1,04 | -0,01 | -0,13 |
| ΔE | 1,29 | 0,55 | 0,19 |

**Tabelle 8**

| Lackformulierung | F3a* | F3c |
|---|---|---|
| **Abgemischt in Glanzlack 275, Basis 40** | | |
| **Farbstärke gegen F3a*** | 100 | 101,9 |
| **Farbe gegen F3a*** | | |
| ΔL | 0 | 0,01 |
| Δa | 0 | -0,05 |
| Δb | 0 | -0,09 |
| ΔE | 0 | 0,50 |
| **Rubout** | | |
| ΔL | 2,54 | 0,53 |

(fortgesetzt)

| Rubout | | |
|---|---|---|
| ∆a | -1,87 | -0,26 |
| ∆b | -0,19 | -0,07 |
| ∆E | 3,15 | 0,59 |

**Tabelle 9**

| **Lackformulierung** | **F4a*** | **F4b** | **F4c** |
|---|---|---|---|
| **Farbstärke gegen F4a*** | 100 | 103,8 | 104,1 |
| **Farbe gegen F4a*** | | | |
| ∆L | 0 | 2,05 | 0,99 |
| ∆a | 0 | 1,80 | 1,41 |
| ∆b | 0 | 2,48 | 2,22 |
| ∆E | 0 | 3,86 | 2,81 |
| **Rubout** | | | |
| ∆L | 2,39 | 0,26 | 0,10 |
| ∆a | 0,61 | -0,47 | -0,29 |
| ∆b | 1,14 | -0,25 | -0,51 |
| ∆E | 2,71 | 0,59 | 0,59 |

Zusammenfassend für die Anwendung der erfindungsgemäßen Epoxid-Amin-Addukte in Pigmentkonzentraten lässt sich festhalten, dass deutlich höhere Farbstärken als mit Netz- und Dispergieradditiven des Standes der Technik erreicht wurden. In den Formulierungen **F1c, F1d, F2c** und **F2d** wurden die blauen Farbtöne durch den Einsatz der erfindungsgemäßen Additive gegenüber den Formulierungen **F1a*** beziehungsweise **F2a*** wunschgemäß hin zu einem tieferen Blau verschoben (-b Anteil). Die grüne Formulierung **F3c** erscheint deutlich grüner (-a Anteil) als die entsprechende Referenzformulierung **F3a*** und die orange-farbene Formulierungen **F4b** und **F4c** zeigen einen deutlich kräftigeren Rot- und Gelbanteil (+a und +b Anteile) durch Verwendung der erfindungsgemäßen Epoxid-Amin-Addukte im Vergleich zur Formulierung **F4a*.** Die erfindungsgemäßen Additive stabilisieren die Farbpasten sehr gut und erreichen im Rubout deutlich bessere □E-Werte.

**Herstellung und Prüfung von Polymerbeton-Massen**

**Rohstoffe**

| | |
|---|---|
| Palatal P4-01 | Ungesättigtes Polyesterharz auf Basis o-Phthalsäure und Glykolen gelöst in Stryol, Hersteller: Aliancys |
| BYK-C 8000 | Reaktiver polymerer Coupling-Agent, Hersteller: BYK |
| Akzo NL-51 P | Co(II) 2-ethylhexanoate, Beschleuniger für ungesättigte Polyesterharze, Hersteller: Akzo Nobel |
| Dorsilit 7 | Kristallquarzsand der Körnung 0,6 bis 1,2mm, Hersteller Dorfner |
| Dorsilit 8 | Kristallquarzsand der Körnung 0,3 bis 0,8mm, Hersteller Dorfner |
| Millisil W 10 | Quarzmehl, Hersteller: Quarzwerke |
| Hostaperm-Rot E3B | Chinacridon-Rotpigment, Hersteller: Clariant |
| Trigonox C | tert-Butylperoxybenzoat, Radikalinitiator, Hersteller: Akzo Nobel |

**1. Herstellung gefüllter ungesättigter Polyester-Harze (UP) zum Zwecke der Bestimmung der Viskositätsreduzierung**

Das UP-Harz und das Additiv wurden in einem Becher mit 80 mm Durchmesser vorgelegt und mit einem Spatel von Hand verrührt. Anschließend wurde der Füllstoff Milisil W10 zugewogen und ebenfalls mit einem Spatel eingerührt. Danach wurde dieser Compound unter folgenden Bedingungen dispergiert:1 min mittels eines Dissolvers (40 mm Dissolverscheibe, Umfangsgeschwindigkeit 1,95 m/s (930 rpm)), und weitere 2 min mittels eines Dissolvers (40 mm Dissolverscheibe, Umfangsgeschwindigkeit 3,9 m/s (1865 rpm)) dispergiert. Die entsprechenden Formulierungen sind in Tabelle 10 wiedergegeben.

Nach dem Dispergieren wurde die Probe in einen Aluminiumbecher gefüllt und 30 Minuten bei 30 °C in einem Wasserbad gelagert. Die Viskosität in Pascalsekunden wurde bei 30 °C mit einem Brookfield DV II+ Rotationsviskosimeter bestimmt (Spindel 6, Scherrate 20 U/min). Die Viskositäten sowie die prozentualen Reduktionen der Viskosität gegenüber **UP1*** sind in Tabelle 10 wiedergegeben.

**Tabelle 10**

| **Formulierung** | **UP1*** | **UP2*** | **UP3*** | **UP4** | **UP5** | **UP6** |
|---|---|---|---|---|---|---|
| Palatal P4-01 | 30,00 | 29,30 | 29,30 | 29,30 | 29,30 | 29,30 |
| BYK-W 908 | - | 0,70 | - | - | - | - |
| BYK-W 909 | - | - | 0,70 | - | - | - |
| EA3 | - | - | - | 0,70 | - | - |
| EA4 | - | - | - | - | 0,70 | |
| EA7 | | | | | | 0,70 |
| Millisil W 10 | 70,00 | 70,00 | 70,00 | 70,00 | 70,00 | 70,00 |
| **Summe der Gewichtsteile** | 100,00 | 100,00 | 100,00 | 100,00 | 100,00 | 100,00 |
| Viskosität [Pa.s] | 80,8 | 51,8 | 58,4 | 37,6 | 46,0 | 36,2 |
| Reduktion der Viskosität [%] | | 35,9 | 27,7 | 53,5 | 43,1 | 55,2 |
| 1% Additiv auf Füllstoff | | | | | | |

Die erfindungsgemäßen Formulierungen UP4, UP5 und UP6, welche die erfindungsgemäßen Epoxid-Amin-Addukte enthalten, vermögen die Viskosität der Formulierung im Vergleich zu herkömmlichen Netz- und Dispergiermitteln des Standes der Technik viel deutlicher herabzusetzen. Besonders aufgeprägt ist dies im Falle der Formulierungen UP4 und UP6, die von EA3 und EA7 Gebrauch machen. In EA3 und EA7 gilt n>m (EtO:PrO = 31:10), während für EA4 m>n (EtO:PrO = 6:29) gilt.

Dieser Test ist ein Vortest im Rahmen der Polymerbetonherstellung. Er wurde genutzt, um den Additiveinfluss auf die Viskositätsreduktion zu bestimmen. Hierfür wurde zunächst weder ein Coupling Agent (BYK C 8000), noch ein Katalysator eingesetzt. Außerdem wurde auf den Zusatz grober Silikate verzichtet, um die Viskositätsmessungen durchzuführen.

**2. Herstellung der Polymerbetonmassen**

Das UP-Harz (Palatal P4-01), Coupling Agent (Haftvermittler) (BYK C 8000), ein Co-Beschleuniger (Akzo NL-51P) und Radikalinitiator (Trigonox C) wurden in einem Becher vorgelegt. Die Mengen sind Tabelle 11 entnehmbar. Anschließend wurden Netz- und Dispergieradditiv und Pigment zugegeben und von Hand verrührt. Danach wurde der Quarz-Mix und das Quarzmehl zugegeben und von Hand verrührt. Der Compound wurde dann im Speed Mixer DAC 400.1 FVZ für 10 Sekunden bei 1650 U/min homogenisiert.

**3. Herstellung von Polymerbeton-Fliesen (PBF)**

Ein quadratischer Metall-Distanzrahmen (ca. 6 mm stark, 20 cm Kantenlänge) wird mit einer PE-Folie ausgekleidet und die Probe der Polymerbetonmasse wird im Metall-Distanzrahmen verteilt. Der gefüllte Metall-Distanzrahmen wird vor dem Verpressen mit einer PE-Folie abgedeckt, um eine Verunreinigung der Presse zu vermeiden. Anschließend wird der so hergestellte Probekörper für 5 Minuten bei 50 bar (ca. 250 $N/cm^2$) und 90°C unter Nutzung einer Poylstat

200T Presse verpresst. Die gepresste Masse wird anschließend aus dem Distanzrahmen genommen und auf eine mit einem Trennwachs vorbehandelte Glasplatte gelegt. Die finale Aushärtung der Polymerbeton-Fliese erfolgt in einem Umluft-Trockenschrank bei 80°C für 1 Stunde. Die Polymerbeton-Zusammensetzungen sind in Tabelle 11 wiedergegeben.

Die ausgehärteten Polymerbeton-Fliesen werden anschließend hinsichtlich ihrer Oberflächenbeschaffenheit nach einem Schulnotensystem von 1 bis 6 beurteilt. Dabei steht 1 für eine glatte, kompaktierte Oberfläche ohne tiefe Löcher und mit gutem Verlauf. Solche Proben haben gewünschten Eigenschaften wie hohe Festigkeit, wenig Lufteinschlüsse und hochwertiges Erscheinungsbild. 6 steht für eine raue Oberfläche, die sehr inhomogen, porig aussieht und auf eine schlechte Kompaktierung hindeutet. Solche Proben weisen eine geringere Festigkeit auf, haben tiefe Fehlstellen oder krümeln. Die Bewertungen sind in Tabelle 11 wiedergegeben. Beim Einsatz erfindungsgemäßer Epoxid-Amin-Addukte **(EA3, EA4** und **EA7)** konnte eine stark verbesserte Oberflächengüte festgestellt werden.

**Tabelle 11**

| **Formulierung** | **PBF1*** | **PBF2*** | **PBF3*** | **PBF4** | **PBF5** | **PBF6** |
|---|---|---|---|---|---|---|
| Palatal P4-01 | 19,00 | 18,43 | 18,43 | 18,43 | 18,43 | 18,43 |
| BYK-C 8000 | 0,19 | 0,19 | 0,19 | 0,19 | 0,19 | 0,19 |
| Akzo NL-51P | 0,04 | 0,04 | 0,04 | 0,04 | 0,04 | 0,04 |
| Trigonox C | 0,38 | 0,38 | 0,38 | 0,38 | 0,38 | 0,38 |
| BYK-W 908 | - | 0,57 | - | - | - | - |
| BYK-W 909 | - | - | 0,57 | - | - | - |
| EA3 | - | - | - | 0,57 | - | - |
| EA4 | - | - | - | - | 0,57 | - |
| EA7 | - | - | - | - | - | 0,57 |
| Hostaperm-Rot E3B | 2,09 | 2,09 | 2,09 | 2,09 | 2,09 | 2,09 |
| Dorsilit 7/ Dorsilit 8 (1:1) | 122,00 | 122,00 | 122,00 | 122,00 | 122,00 | 122,00 |
| Millisil W 10 | 59,00 | 59,00 | 59,00 | 59,00 | 59,00 | 59,00 |
| **Oberflächengüte** | 6 | 4 | 3 | 1 | 2 | 1 |

Die erfindungsgemäßen Formulierungen PBF4, PBF5 und PBF6, welche die erfindungsgemäßen Epoxid-Amin-Addukte enthalten, liefern eine hervorrangende Oerflächengüte im Vergleich zu herkömmlichen Netz- und Dispergiermitteln des Standes der Technik. Besonders aufgeprägt ist dies im Falle der Formulierungen PBF4 und PBF6, die von EA3 und EA7 Gebrauch machen. In EA3 und EA7 gilt n>m (EtO:PrO = 31:10), während für EA4 m>n (EtO:PrO = 6:29) gilt.

## Patentansprüche

1. Epoxid-Amin-Addukt erhältlich durch Umsetzung eines oder mehrerer primärer Amine (A) der allgemeinen Formel (I)

$$Q\text{-}NH_2 \qquad (I),$$

mit einem oder mehreren Monoepoxiden (B) der allgemeinen Formel (II)

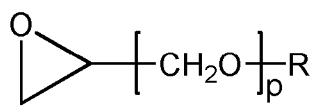

(II)

wobei

Q für einen Rest mit $R^t$-$[OEt]_n[OPr]_m[OBu]_s$- steht, worin
$R^t$ für einen Rest gewählt aus Alkylresten mit 1 bis 6 Kohlenstoffatomen steht,

OEt für einen Ethylenoxid-Rest, OPr für einen Propylenoxid-Rest und OBu für einen Butylenoxid-Rest steht, n für eine Zahl von 0 bis 100, m für eine Zahl von 3 bis 50 und s für eine Zahl von 0 bis 20 steht und n+m+s = 3 bis 170 beträgt,
R für einen organischen Rest steht, gewählt aus aliphatischen Resten mit 4 bis 24 Kohlenstoffatomen, aromatischen Resten mit 6 bis 18 Kohlenstoffatomen und araliphatischen Resten mit 7 bis 34 Kohlenstoffatomen, und p für 0 oder 1 steht, **dadurch gekennzeichnet, dass**

(i)das oder die primären Amine (A) und das oder die Monoepoxide (B) in einem Äquivalentverhältnis (A):(B) von 1:2 bis 1:1,35 umgesetzt werden; und
(ii) mindestens 40 mol-% der Reste R gewählt sind aus aromatischen Resten mit 6 bis 18 Kohlenstoffatomen und araliphatischen Resten mit 7 bis 24 Kohlenstoffatomen; und gegebenenfalls anschließender

(a) Versalzung und/oder Quaternisierung des über die Formel (I) in das Umsetzungsprodukt aus (A) und (B) eingebrachten Stickstoffatoms; und/oder
(b) Reaktion der durch Ringöffnung des Epoxidrings der Formel (II) gebildeten Hydroxylgruppe und/oder der durch äquimolare Umsetzung einer Spezies der Formel (I) mit einer Spezies der Formel (II) entstandenen NH-Gruppe mit einer oder mehreren Spezies gewählt aus der Gruppe bestehend aus Lactonen, Hydroxycarbonsäuren, Lactiden, Monoepoxidverbindungen und Monoisocyanaten.

2. Epoxid-Amin-Addukt gemäß Anspruch 1, **dadurch gekennzeichnet, dass** dieses als Umsetzungsprodukt aus (A) und (B) eine oder mehrere Spezies der allgemeinen Formel (III)

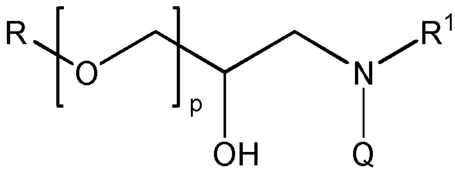
(III)

enthält,
wobei

Q, R und p wie in Formel (I) definiert sind, und
$R^1$ für H oder einen Rest $CH_2$-CH(OH)-$[CH_2-O]_p$-R steht, mit der Maßgabe, dass mindestens 33 mol-% der Reste $R^1$ für $CH_2$-CH(OH)-$[CH_2-O]_{p'}$-R stehen, worin p' = 0 oder 1 ist.

3. Epoxid-Amin-Addukt gemäß Anspruch 2, **dadurch gekennzeichnet, dass** die Spezies (III) im Umsetzungssprodukt aus (A) und (B) in einer Menge von mindestens 50 Gew.-%, bezogen auf das Gewicht des Umsetzungsprodukts aus (A) und (B) enthalten sind.

4. Epoxid-Amin-Addukt gemäß einem oder mehreren der Ansprüche 2 bis 4, **dadurch gekennzeichnet, dass** die Spezies der Formel (III) ganz oder teilweise durch Versalzung zu Spezies der allgemeinen Formel (IVa)

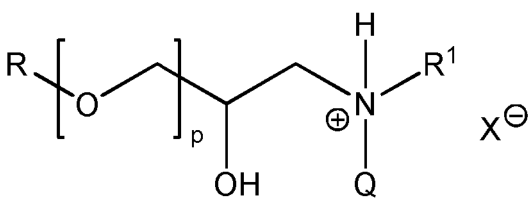
(IVa)

umgesetzt sind, wobei

Q, R, $R^1$ und p wie in Formel (III) definiert sind, und
$X^\ominus$ für ein Säureanion steht

und/oder
ganz oder teilweise durch Quaternisierung zu Spezies der Formel (IVb)

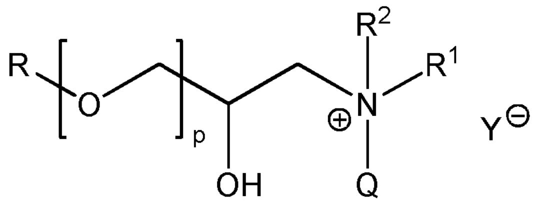

(IVb)

umgesetzt sind, wobei

Q, R und p wie in Formel (III) definiert sind,
$R^1$ für $CH_2$-CH(OH)-$[CH_2$-$O]_{p'}$-R steht, worin p' = 0 oder 1 ist,
$R^2$ für einen aliphatischen Rest mit 4 bis 20 Kohlenstoffatomen, einen aromatischen Rest mit 6 bis 14 Kohlenstoffatomen oder araliphatischen Rest mit 7 bis 30 Kohlenstoffatomen steht, und
$Y^\ominus$ für ein Anion gewählt aus der Gruppe bestehend aus Halogeniden und Sulfat steht oder $Y^\ominus$ mit dem Rest $R^2$ einen Rest $R^2$- $Y^\ominus$ bildet worin $R^2$ für einen Rest $CH_2$ steht und $Y^\ominus$ für $COO^\ominus$ steht.

**5.** Epoxid-Amin-Addukt gemäß einem oder mehreren der Ansprüche 1 bis 4, **dadurch gekennzeichnet, dass** n für eine Zahl von 5 bis 75, m für eine Zahl von 3 bis 40 und s für eine Zahl von 0 bis 10 steht.

**6.** Epoxid-Amin-Addukt gemäß einem oder mehreren der Ansprüche 1 bis 5, **dadurch gekennzeichnet, dass** mindestens 40 mol-% der Reste R gewählt sind aus der Gruppe bestehend aus Phenyl und Kresyl.

**7.** Epoxid-Amin-Addukt gemäß einem oder mehreren der Ansprüche 1 bis 6, **dadurch gekennzeichnet, dass** das oder die primären Amine (A) und das oder die Monoepoxide (B) in einem Äquivalentverhältnis (A):(B) von 1:1,9 bis 1:1,5 umgesetzt werden.

**8.** Netz- und Dispergiermittel enthaltend oder bestehend aus einem oder mehreren Epoxid-Amin-Addukten wie sie in den Ansprüchen 1 bis 7 definiert sind.

**9.** Verfahren zur Herstellung der Netz- und Dispergiermittel wie sie in Anspruch 8 definiert sind, wobei eines oder mehrere primäre Amine (A) der allgemeinen Formel (I)

$$Q\text{-}NH_2 \qquad (I),$$

mit einem oder mehreren Monoepoxiden (B) der allgemeinen Formel (II)

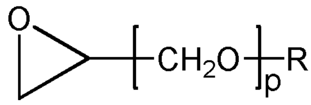

(II)

umgesetzt werden,
wobei

Q für einen Rest mit $R^t$-$[OEt]_n[OPr]_m[OBu]_s$- steht, worin
$R^t$ für einen Rest gewählt aus Alkylresten mit 1 bis 6 Kohlenstoffatomen steht,
OEt für einen Ethylenoxid-Rest, OPr für einen Propylenoxid-Rest und OBu für einen Butylenoxid-Rest steht,
n für eine Zahl von 0 bis 100, m für eine Zahl von 3 bis 50 und s für eine Zahl von 0 bis 20 steht und n+m+s = 3 bis 170 beträgt,
R für einen organischen Rest steht, gewählt aus aliphatischen Resten mit 4 bis 24 Kohlenstoffatomen, aromatischen Resten mit 6 bis 18 Kohlenstoffatomen und araliphatischen Resten mit 7 bis 34 Kohlenstoffatomen, und p für 0 oder 1 steht, **dadurch gekennzeichnet, dass**

(i)das oder die primären Amine (A) und das oder die Monoepoxide (B) in einem Äquivalentverhältnis (A):(B) von 1:2 bis 1:1,35 umgesetzt werden; und
(ii) mindestens 40 mol-% der Reste R gewählt sind aus aromatischen Resten mit 6 bis 18 Kohlenstoffatomen und araliphatischen Resten mit 7 bis 24 Kohlenstoffatomen; und das dabei gebildete Umsetzungsprodukt

gegebenenfalls ganz oder teilweise

(a) versalzt und/oder quaternisiert wird, indem das über die Formel (I) in das Umsetzungsprodukt aus (A) und (B) eingebrachte Stickstoffatom mit einer Säure oder einem Quaternisierungsmittel umgesetzt wird; und/oder
(b) modifiziert wird, durch Reaktion der durch Ringöffnung des Epoxidrings der Formel (II) gebildeten Hydroxylgruppe und/oder der durch äquimolare Umsetzung einer Spezies der Formel (I) mit einer Spezies der Formel (II) entstandenen NH-Gruppe mit einer oder mehreren Spezies gewählt aus der Gruppe bestehend aus Lactonen, Hydroxycarbonsäuren, Lactiden, Monoepoxidverbindungen und Monoisocyanaten.

**10.** Verwendung der Epoxid-Amin-Addukte gemäß einem der Ansprüche 1 bis 7, des Netz- und Dispergiermittels gemäß Anspruch 8 und/oder des Netz- und Dispergiermittels erhältlich nach dem Verfahren gemäß Anspruch 9 zur Herstellung einer Dispersion, die ein Dispergiermedium, mindestens eine Art eines dispergierten Feststoffs und besagtes Epoxid-Amin-Addukt und/oder besagtes Netz- und Dispergiermittel umfasst.

**11.** Verwendung der Epoxid-Amin-Addukte gemäß einem der Ansprüche 1 bis 7, des Netz- und Dispergiermittels gemäß Anspruch 8 und/oder des Netz- und Dispergiermittels erhältlich nach dem Verfahren gemäß Anspruch 9 als Emulgator.

**12.** Dispersion, umfassend ein Dispergiermedium, mindestens eine Art eines dispergierten partikulären Feststoffs und mindestens ein Epoxid-Amin-Addukt gemäß einem der Ansprüche 1 bis 7, ein Netz- und Dispergiermittels gemäß Anspruch 8 oder ein Netz- und Dispergiermittel erhältlich nach dem Verfahren gemäß Anspruch 9.

**13.** Dispersion gemäß Anspruch 12, wobei diese gewählt ist aus der Gruppe bestehend aus Tinten, Druckfarben, Beschichtungsmitteln, Farben, Pigmentpasten, Füllstoffpasten, Pigmentkonzentraten, Keramikmaterialien, Kosmetika, Gießmassen, Formmassen und Polymerbetonmassen.

**14.** Dispersion gemäß Anspruch 12 oder 13, wobei die Gesamtmenge der Epoxid-Amin-Addukte gemäß einem der Ansprüche 1 bis 7, der Netz- und Dispergiermittel gemäß Anspruch 8 und der Netz- und Dispergiermittel erhältlich nach dem Verfahren gemäß Anspruch 9 bezogen auf das Gesamtgewicht der Dispersion 0,1 bis 10 Gew.-% beträgt.

**15.** Partikelzubereitung enthaltend 5,0 bis 99,9 Gew.% eines oder mehrerer partikulärer Feststoffe sowie insgesamt 0,1 bis 95,0 Gew.% eines oder mehrerer Epoxid-Amin-Addukte, eines oder mehrerer Netz- und Dispergiermittel gemäß Anspruch 8 und eines oder mehrerer Netz- und Dispergiermittel erhältlich nach dem Verfahren gemäß Anspruch 9 bezogen auf das Gesamtgewicht der Partikelzubereitung.

## Claims

**1.** An epoxide-amine adduct obtainable by reaction of one or more primary amines (A) of general formula (I)

$$Q\text{-}NH_2 \qquad (I)$$

with one or more monoepoxides (B) of general formula (II)

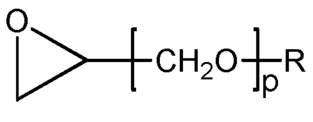

(II),

wherein

Q is a radical $R^t$-$[OEt]_n[OPr]_m[OBu]_s$-, in which
$R^t$ is a radical selected from alkyl radicals having 1 to 6 carbon atoms,
OEt is an ethylene oxide radical, OPr is a propylene oxide radical and OBu is a butylene oxide radical,
n is a number from 0 to 100, m is a number from 3 to 50 and s is a number from 0 to 20 and n+m+s = 3 to 170,
R is an organic radical selected from aliphatic radicals having 4 to 24 carbon atoms, aromatic radicals having

6 to 18 carbon atoms and araliphatic radicals having 7 to 34 carbon atoms, and p is 0 or 1,

**characterized in that**

(i) the primary amine(s) (A) and the monoepoxide(s) (B) are reacted in an equivalents ratio (A):(B) of from 1:2 to 1:1.35; and
(ii) at least 40 mol% of the radicals R are selected from aromatic radicals having 6 to 18 carbon atoms and araliphatic radicals having 7 to 24 carbon atoms; and optionally subsequent

(a) salification and/or quaternization of the nitrogen atom introduced into the reaction product of (A) and (B) via formula (I); and/or
(b) reaction of the hydroxyl group, formed by ring opening of the epoxide ring of formula (II), and/or of the NH group, formed by equimolar reaction of a species of formula (I) with a species of formula (II), with one or more species selected from the group consisting of lactones, hydroxycarboxylic acids, lactides, monoepoxide compounds and monoisocyanates.

2. The epoxide-amine adduct as claimed in claim 1, **characterized in that** it comprises one or more species of general formula (III)

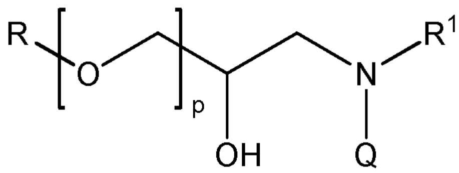
(III)

as reaction product of (A) and (B),
wherein

Q, R and p are as defined in formula (I), and
$R^1$ is H or a radical $CH_2$-$CH(OH)$-[$CH_2$-O]$_p$-R, with the proviso that
at least 33 mol% of the radicals $R^1$ are $CH_2$-$CH(OH)$-[$CH_2$-O]$_p$-R, in which p' = 0 or 1.

3. The epoxide-amine adduct as claimed in claim 2, **characterized in that** species (III) are present in the reaction product of (A) and (B) in an amount of at least 50% by weight, based on the weight of the reaction product of (A) and (B).

4. The epoxide-amine adduct as claimed in one or more of claims 2 to 4, **characterized in that** the species of formula (III) are fully or partially converted by salification into species of general formula (IVa)

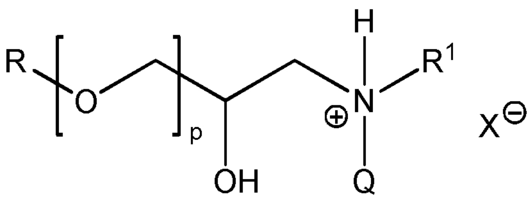
(IVa),

wherein

Q, R, $R^1$ and p are as defined in formula (III), and
$X^{\ominus}$ is an acid anion

and/or
are fully or partially converted by quaternization into species of formula (IVb)

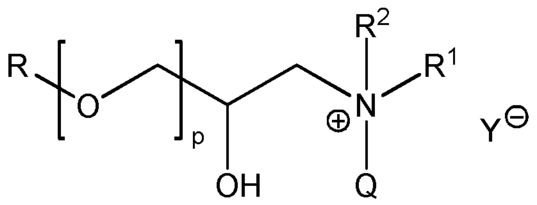

(IVb),

wherein

Q, R and p are as defined in formula (III),
$R^1$ is $CH_2$-CH(OH)-[$CH_2$-O]$_{p'}$-R, in which p' = 0 or 1,
$R^2$ is an aliphatic radical having 4 to 20 carbon atoms, an aromatic radical having 6 to 14 carbon atoms or araliphatic radical having 7 to 30 carbon atoms, and
$Y^{\ominus}$ is an anion selected from the group consisting of halides and sulfate or $Y^{\ominus}$ forms with the radical $R^2$ a radical $R^2$- $Y^{\ominus}$ in which $R^2$ is a radical $CH_2$ and $Y^{\ominus}$ is $COO^{\ominus}$.

**5.** The epoxide-amine adduct as claimed in one or more of claims 1 to 4, **characterized in that** n is a number from 5 to 75, m is a number from 3 to 40 and s is a number from 0 to 10.

**6.** The epoxide-amine adduct as claimed in one or more of claims 1 to 5, **characterized in that** at least 40 mol% of the radicals R are selected from the group consisting of phenyl and cresyl.

**7.** The epoxide-amine adduct as claimed in one or more of claims 1 to 6, **characterized in that** the primary amine(s) (A) and the monoepoxide(s) (B) are reacted in an equivalents ratio (A):(B) of from 1:1.9 to 1:1.5.

**8.** A wetting agent and dispersant comprising or consisting of one or more epoxide-amine adducts as have been defined in claims 1 to 7.

**9.** A process for the production of wetting agents and dispersants as defined in claim 8, wherein one or more primary amines (A) of general formula (I)

$Q-NH_2$ (I)

are reacted with one or more monoepoxides (B) of general formula (II)

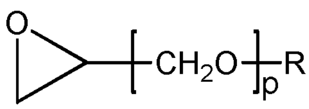

(II),

wherein

Q is a radical $R^t$-[OEt]$_n$[OPr]$_m$[OBu]$_s$-, in which
$R^t$ is a radical selected from alkyl radicals having 1 to 6 carbon atoms,
OEt is an ethylene oxide radical, OPr is a propylene oxide radical and OBu is a butylene oxide radical,
n is a number from 0 to 100, m is a number from 3 to 50 and s is a number from 0 to 20 and n+m+s = 3 to 170,
R is an organic radical selected from aliphatic radicals having 4 to 24 carbon atoms, aromatic radicals having 6 to 18 carbon atoms and araliphatic radicals having 7 to 34 carbon atoms, and p is 0 or 1,

**characterized in that**

(i) the primary amine(s) (A) and the monoepoxide(s) (B) are reacted in an equivalents ratio (A):(B) of from 1:2 to 1:1.35; and
(ii) at least 40 mol% of the radicals R are selected from aromatic radicals having 6 to 18 carbon atoms and araliphatic radicals having 7 to 24 carbon atoms; and the reaction product formed in the process is optionally fully or partially

(a) salified and/or quaternized by reacting the nitrogen atom introduced into the reaction product of (A) and (B) via formula (I) with an acid or a quaternizing agent; and/or
(b) is modified by reaction of the hydroxyl group, formed by ring opening of the epoxide ring of formula (II), and/or of the NH group, formed by equimolar reaction of a species of formula (I) with a species of formula (II), with one or more species selected from the group consisting of lactones, hydroxycarboxylic acids, lactides, monoepoxide compounds and monoisocyanates.

**10.** The use of the epoxide-amine adducts as claimed in any of claims 1 to 7, of the wetting agent and dispersant as claimed in claim 8 and/or of the wetting agent and dispersant obtainable by the process as claimed in claim 9 for the production of a dispersion comprising a dispersion medium, at least one kind of a dispersed solid and said epoxide-amine adduct and/or said wetting agent and dispersant.

**11.** The use of the epoxide-amine adducts as claimed in any of claims 1 to 7, of the wetting agent and dispersant as claimed in claim 8 and/or of the wetting agent and dispersant obtainable by the process as claimed in claim 9 as emulsifier.

**12.** A dispersion comprising a dispersion medium, at least one kind of a dispersed particulate solid and at least one epoxide-amine adduct as claimed in any of claims 1 to 7, a wetting agent and dispersant as claimed in claim 8 or a wetting agent and dispersant obtainable by the process as claimed in claim 9.

**13.** The dispersion as claimed in claim 12, wherein it is selected from the group consisting of inks, printing inks, coating compositions, paints, pigment pastes, filler pastes, pigment concentrates, ceramic materials, cosmetics, casting compounds, molding compounds and polymer concrete compositions.

**14.** The dispersion as claimed in claim 12 or 13, wherein the total amount of the epoxide-amine adducts as claimed in any of claims 1 to 7, of the wetting agents and dispersants as claimed in claim 8 and of the wetting agents and dispersants obtainable by the process as claimed in claim 9, based on the total weight of the dispersion, is 0.1% to 10% by weight.

**15.** A particle formulation comprising 5.0% to 99.9% by weight of one or more particulate solids and collectively 0.1% to 95.0% by weight of one or more epoxide-amine adducts, one or more wetting agents and dispersants as claimed in claim 8 and one or more wetting agents and dispersants obtainable by the process as claimed in claim 9, based on the total weight of the particle formulation.

## Revendications

**1.** Adduit époxyde-amine pouvant être obtenu par mise en réaction d'une ou de plusieurs amines primaires (A) de la formule générale (I)

$$Q\text{-}NH_2 \qquad (I)$$

avec un ou plusieurs monoépoxydes (B) de la formule générale (II)

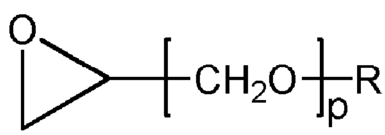

(II)

dans lesquelles

Q représente un radical muni de $R^t$-$[OEt]_n[OPr]_m[OBu]_s$-, où
$R^t$ représente un radical choisi parmi les radicaux alkyle de 1 à 6 atomes de carbone,
OEt représente un radical oxyde d'éthylène, OPr représente un radical oxyde de propylène et OBu représente un radical oxyde de butylène,
n représente un nombre de 0 à 100, m représente un nombre de 3 à 50 et s représente un nombre de 0 à 20, et n+m+s = 3 à 170,

R représente un radical organique, choisi parmi les radicaux aliphatiques de 4 à 24 atomes de carbone, les radicaux aromatiques de 6 à 18 atomes de carbone, et les radicaux araliphatiques de 7 à 34 atomes de carbone, et p représente 0 ou 1,

**caractérisé en ce que**

(i) la ou les amines primaires (A) et le ou les époxydes (B) sont mis en réaction en un rapport équivalent (A):(B) de 1:2 à 1:1,35 ; et
(ii) au moins 40 % en moles des radicaux R sont choisis parmi les radicaux aromatiques de 6 à 18 atomes de carbone et les radicaux araliphatiques de 7 à 24 atomes de carbone ; et éventuellement ensuite

(a) salinisation et/ou quaternisation de l'atome d'azote introduit dans le produit de réaction de (A) et (B) par l'intermédiaire de la formule (I) ; et/ou
(b) réaction du groupe hydroxyle formé par ouverture de cycle du cycle époxyde de la formule (II) et/ou du groupe NH formé par mise en réaction équimolaire d'une espèce de la formule (I) avec une espèce de la formule (II) avec une ou plusieurs espèces choisies dans le groupe constitué par les lactones, les acides hydroxycarboxyliques, les lactides, les composés de monoépoxyde et les monoisocyanates.

2. Adduit époxyde-amine selon la revendication 1, **caractérisé en ce que** celui-ci contient en tant que produit de réaction de (A) et (B) une ou plusieurs espèces de la formule générale (III)

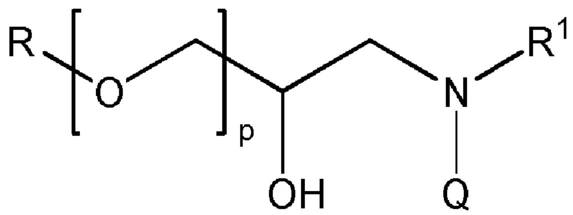

(III)

dans laquelle

Q, R et p sont tels que définis dans la formule (I), et
$R^1$ représente H ou un radical $CH_2$-CH(OH)-[$CH_2$-O]$_p$-R, à condition qu'au moins 33 % en moles des radicaux $R^1$ représentent $CH_2$-CH(OH)-[$CH_2$-O]$_{p'}$-R, où p' = 0 ou 1.

3. Adduit époxyde-amine selon la revendication 2, **caractérisé en ce que** les espèces (III) sont contenues dans le produit de réaction de (A) et (B) en une quantité d'au moins 50 % en poids, par rapport au poids du produit de réaction de (A) et (B).

4. Adduit époxyde-amine selon une ou plusieurs des revendications 2 à 4, **caractérisé en ce que** les espèces de la formule (III) sont transformées en totalité ou en partie par salinisation en espèces de la formule générale (IVa)

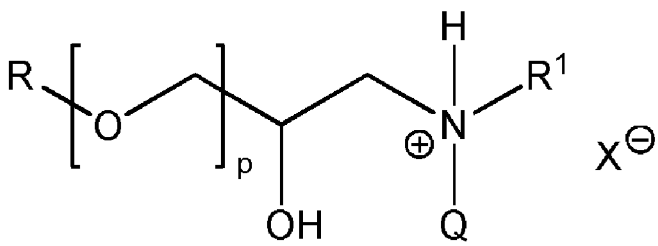

(IVa)

dans laquelle

Q, R, $R^1$ et p sont tels que définis dans la formule (III), et
$X^{\ominus}$ représente un anion acide

et/ou
en totalité ou en partie par quaternisation en espèces de la formule (IVb)

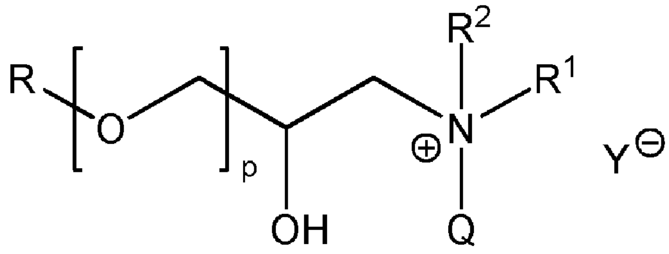

(IVb)

dans laquelle

Q, R et p sont tels que définis dans la formule (III),
$R^1$ représente $CH_2$-CH(OH)-[$CH_2$-O]$_{p'}$-R, où p' = 0 ou 1,
$R^2$ représente un radical aliphatique de 4 à 20 atomes de carbone, un radical aromatique de 6 à 14 atomes de carbone ou un radical araliphatique de 7 à 30 atomes de carbone, et
$Y^\ominus$ représente un anion choisi dans le groupe constitué par les halogénures et le sulfate, ou $Y^\ominus$ forme avec le radical $R^2$ un radical $R^2$- $Y^\ominus$ où $R^2$ représente un radical $CH_2$ et $Y^\ominus$ représente $COO^\ominus$.

5. Adduit époxyde-amine selon une ou plusieurs des revendications 1 à 4, **caractérisé en ce que** n représente un nombre de 5 à 75, m représente un nombre de 3 à 40 et s représente un nombre de 0 à 10.

6. Adduit époxyde-amine selon une ou plusieurs des revendications 1 à 5, **caractérisé en ce qu'**au moins 40 % en moles des radicaux R sont choisis dans le groupe constitué par phényle et crésyle.

7. Adduit époxyde-amine selon une ou plusieurs des revendications 1 à 6, **caractérisé en ce que** la ou les amines primaires (A) et le ou les monoépoxydes (B) sont mis en réaction en un rapport équivalent (A):(B) de 1:1,9 à 1:1,5.

8. Agent mouillant et dispersant contenant ou constitué par un ou plusieurs adduits époxyde-amine tels que définis dans les revendications 1 à 7.

9. Procédé de fabrication des agents mouillants et dispersants tels que définis dans la revendication 8, dans lequel une ou plusieurs amines primaires (A) de la formule générale (I)

$Q-NH_2$ (I)

sont mises en réaction avec un ou plusieurs monoépoxydes (B) de la formule générale (II)

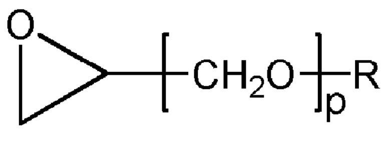

(II)

dans lesquelles

Q représente un radical muni de $R^t$-[OEt]$_n$[OPr]$_m$[OBu]$_s$-, où $R^t$ représente un radical choisi parmi les radicaux alkyle de 1 à 6 atomes de carbone,
OEt représente un radical oxyde d'éthylène, OPr représente un radical oxyde de propylène et OBu représente un radical oxyde de butylène,
n représente un nombre de 0 à 100, m représente un nombre de 3 à 50 et s représente un nombre de 0 à 20, et n+m+s = 3 à 170,
R représente un radical organique, choisi parmi les radicaux aliphatiques de 4 à 24 atomes de carbone, les radicaux aromatiques de 6 à 18 atomes de carbone, et les radicaux araliphatiques de 7 à 34 atomes de carbone, et p représente 0 ou 1,

**caractérisé en ce que**

(i) la ou les amines primaires (A) et le ou les époxydes (B) sont mis en réaction en un rapport équivalent (A):(B) de 1:2 à 1:1,35 ; et
(ii) au moins 40 % en moles des radicaux R sont choisis parmi les radicaux aromatiques de 6 à 18 atomes de carbone et les radicaux araliphatiques de 7 à 24 atomes de carbone ; et le produit de réaction ainsi formé est éventuellement en totalité ou en partie

(a) salinisé et/ou quaternisé, **en ce que** l'atome d'azote introduit dans le produit de réaction de (A) et (B) par l'intermédiaire de la formule (I) est mis en réaction avec un acide ou un agent de quaternisation ; et/ou
(b) modifié, par réaction du groupe hydroxyle formé par ouverture de cycle du cycle époxyde de la formule (II) et/ou du groupe NH formé par mise en réaction équimolaire d'une espèce de la formule (I) avec une espèce de la formule (II) avec une ou plusieurs espèces choisies dans le groupe constitué par les lactones, les acides hydroxycarboxyliques, les lactides, les composés de monoépoxyde et les monoisocyanates.

**10.** Utilisation des adduits époxyde-amine selon l'une quelconque des revendications 1 à 7, de l'agent mouillant et dispersant selon la revendication 8 et/ou de l'agent mouillant et dispersant pouvant être obtenu par le procédé selon la revendication 9 pour la fabrication d'une dispersion, qui comprend un milieu de dispersion, au moins un type de solide dispersé et ledit adduit époxyde-amine et/ou ledit agent mouillant et dispersant.

**11.** Utilisation des adduits époxyde-amine selon l'une quelconque des revendications 1 à 7, de l'agent mouillant et dispersant selon la revendication 8 et/ou de l'agent mouillant et dispersant pouvant être obtenu par le procédé selon la revendication 9 en tant qu'émulsifiant.

**12.** Dispersion, comprenant un milieu de dispersion, au moins un type de solide particulaire dispersé et au moins un adduit époxyde-amine selon l'une quelconque des revendications 1 à 7, un agent mouillant et dispersant selon la revendication 8 ou un agent mouillant et dispersant pouvant être obtenu par le procédé selon la revendication 9.

**13.** Dispersion selon la revendication 12, celle-ci étant choisie dans le groupe constitué par les encres, les encres d'impression, les agents de revêtement, les peintures, les pâtes de pigments, les pâtes de charges, les concentrés de pigments, les matériaux céramiques, les cosmétiques, les masses de coulage, les masses de moulage et les masses de béton polymère.

**14.** Dispersion selon la revendication 12 ou 13, dans laquelle la quantité totale des adduits époxyde-amine selon l'une quelconque des revendications 1 à 7, des agents mouillants et dispersants selon la revendication 8 ou des agents mouillants et dispersants pouvant être obtenus par le procédé selon la revendication 9, par rapport au poids total de la dispersion, est de 0,1 à 10 % en poids.

**15.** Préparation particulaire contenant 5,0 à 99,9% en poids d'un ou de plusieurs solides particulaires, ainsi qu'au total 0,1 à 95,0 % en poids d'un ou de plusieurs adduits époxyde-amine, d'un ou de plusieurs agents mouillants et dispersants selon la revendication 8 et d'un ou de plusieurs agents mouillants et dispersants pouvant être obtenus par le procédé selon la revendication 9, par rapport au poids total de la préparation particulaire.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1486524 A1
- EP 1650246 A1
- EP 1745104 A1
- WO 2012049186 A
- WO 2008092687 A1
- WO 2011070074 A1
- WO 2016059066 A1
- US 9206347 B2

### In der Beschreibung aufgeführte Nicht-Patentliteratur

- Pigmente, Füllstoffe, Farbmetrik. Lehrbuch der Lacke und Beschichtungen. S. Hirzel Verlag, 2003, vol. 5